# FASCICULE DE BREVET EUROPEEN

(11) **EP 4 126 527 B1**
(45) Date de publication et mention de la délivrance du brevet: **14.02.2024**
(21) Numéro de dépôt: 21716806.1
(22) Date de dépôt: 23.03.2021
(51) Int. Cl.: B32B 3/08, B32B 3/26, B32B 17/10, B60J 1/00, B60J 1/17

(54) **VITRAGE FEUILLETÉ POUR UN VÉHICULE AUTOMOBILE, NOTAMMENT UN VITRAGE LATÉRAL**
VERBUNDGLASSCHEIBE FÜR EIN KRAFTFAHRZEUG, INSBESONDERE EINE SEITENVERGLASUNG
LAMINATED GLAZING FOR A MOTOR VEHICLE, IN PARTICULAR A LATERAL GLAZING

(30) Priorité: 25.03.2020 FR 2002921
(43) Date de publication de la demande: 08.02.2023
(73) Titulaire: Saint-Gobain Glass France, 92400 Courbevoie (FR)
(72) Inventeur: BERTHE, Frédéric, 60170 Cambronne lès Ribecourt (FR); DROUET, Xavier, 95670 Marly-la-Ville (FR); LAMOUREUX, Laurent, 51270 Montmort-Lucy (FR); RAPENNE, Thibault, 60400 Noyon (FR)
(74) Mandataire: Saint-Gobain Recherche
(86) Numéro de dépôt international: PCT/FR2021/050485
(87) Numéro de publication internationale: WO 2021/191549

(56) Documents cités:
- WO-A1-2018/178882
- US-A1- 2005 144 862

## Description

### Domaine technique de l'invention

L'invention concerne un vitrage feuilleté pour un véhicule automobile, notamment un vitrage latéral.

L'invention concerne plus particulièrement un vitrage feuilleté pour un véhicule automobile comportant au moins une feuille de verre extérieure et une feuille de verre intérieure assemblées par un intercalaire qui comporte au moins une feuille en matériau polymère, ledit vitrage comportant au moins une partie de fixation du vitrage munie d'au moins un trou de fixation qui présente un axe et traverse au moins la feuille de verre extérieure, ledit trou de fixation étant destiné à recevoir des moyens de fixation dudit vitrage avec un dispositif d'entraînement.

L'invention sera plus particulièrement décrite pour une utilisation dans le domaine automobile en tant que vitrage latéral destiné à être monté coulissant dans la carrosserie d'un véhicule automobile, en particulier dans une portière du véhicule, mais n'est toutefois pas limitée à une telle application.

### Arrière-plan technique

Les vitrages automobiles sont sujets à des performances toujours plus exigeantes et souvent difficilement conciliables, tel est notamment le cas des vitrages latéraux.

Dans un véhicule automobile, les vitrages latéraux sont généralement montés coulissant par l'intermédiaire d'un dispositif d'entraînement dans les portières du véhicule.

Un tel vitrage latéral comporte une zone visible et une zone non visible qui s'étendent de part et d'autre d'une limite de visibilité, ladite zone non visible située en dessous de la limite de visibilité comportant une partie de fixation du vitrage qui est reliée au dispositif d'entraînement par les moyens de fixation.

Par ailleurs, dans certains véhicules et pour des raisons notamment esthétiques, les portières ne comportent pas de cadre autour du vitrage latéral, à l'instar de certains cabriolets, ce qui participe à accroître les exigences de performance du vitrage, en particulier sur le plan de la sécurité en cas de chocs.

De telles portières sans cadre sont encore désignées dans le domaine automobile par le terme anglais « *frameless* ».

De manière connue, le dispositif d'entraînement du vitrage latéral est commandé sélectivement par l'intermédiaire d'un organe, tel qu'une manivelle ou un bouton électrique, pour déplacer le vitrage en hauteur par rapport à la portière, respectivement entre une position fermée et au moins une position ouverte.

Les vitrages latéraux d'un véhicule sont habituellement constitués de feuilles de verre monolithiques plus ou moins épaisses. De tels vitrages monolithiques sont par exemple chauffés à une température de l'ordre de 650°C puis refroidis brutalement afin de les tremper, tout en leur donnant généralement une forme torique.

Les vitrages monolithiques (ou trempés) présentent le double avantage d'être plus résistants aux sollicitations mécaniques et de se fragmenter en une multitude de petits morceaux en cas de casse. Une telle fragmentation du vitrage, communément appelée « fragmentation Securit », permet en outre de répondre aux spécifications très précises de la norme internationale R43.

Par comparaison avec un tel vitrage monolithique, un vitrage feuilleté comporte une feuille de verre extérieure et une feuille de verre intérieure qui sont assemblées par un intercalaire comportant au moins une feuille en matériau polymère, telle qu'au moins une feuille de polyvinylbutyral (PVB).

Les constructeurs automobiles souhaitent, notamment pour les véhicules les plus sophistiqués, disposer de vitrages latéraux offrant les meilleures propriétés existantes telles qu'en particulier des qualités d'atténuation acoustique, de résistance contre les effractions, des propriétés athermiques notamment par rapport aux rayonnements solaires de type UV, etc.

C'est l'une des raisons pour lesquelles, on recherche de plus en plus à utiliser des vitrages feuilletés en tant que vitrages latéraux dans un véhicule automobile.

En effet, les vitrages feuilletés permettent d'améliorer le confort acoustique grâce aux propriétés d'absorption de l'intercalaire comportant au moins une feuille en matériau polymère, tel que du polyvinylbutyral (PVB).

Les vitrages feuilletés offrent également une meilleure résistance à l'effraction ainsi que de nouvelles propriétés comme le blocage des rayonnements UV provenant du soleil.

Toutefois, l'utilisation de tels vitrages feuilletés n'est pas sans poser certains problèmes.

L'un des problèmes est de pouvoir obtenir un vitrage feuilleté présentant des caractéristiques, en particulier de comportement mécanique tel que la résistance, équivalentes à celles d'un vitrage monolithique. Cela est tout particulièrement important lorsque l'on recherche une interchangeabilité entre les deux types de vitrage d'une épaisseur donnée afin de pouvoir les substituer.

En effet, les feuilles de verre constitutives du vitrage feuilleté n'atteignent pas les niveaux de contraintes des vitrages monolithiques, en raison notamment de leur moindre épaisseur qui ne permet pas de créer, lors du refroidissement, un gradient thermique suffisant qui soit à même de générer des contraintes nécessaires à l'obtention d'une résistance mécanique équivalente, notamment à la flexion.

C'est la raison pour laquelle, de tels vitrages feuilletés sont encore désignés par les termes « durcis » ou « semi-trempés » par opposition à la désignation de « trempés » couramment utilisée pour les vitrages monolithiques.

L'utilisation d'un vitrage feuilleté en tant que vitrage latéral ne pose pas de problème de sécurité en soit dès lors que la feuille en matériau polymère de l'intercalaire assure la cohésion de l'ensemble en cas d'accident et évite ainsi la projection de morceaux de verre susceptibles de provoquer des blessures. Par comparaison avec un vitrage monolithique, l'obtention d'une fragmentation securit n'est ainsi pas nécessaire avec un vitrage feuilleté.

En revanche, outre leurs caractéristiques de comportement mécanique, les vitrages feuilletés se distinguent généralement des vitrages monolithiques en ce qui concerne leur fixation, par l'intermédiaire de moyens de fixation, au dispositif d'entrainement.

Pour assurer la liaison d'un vitrage latéral avec le dispositif d'entraînement logé dans la portière, on connaît de l'art antérieur différents types de liaison.

On connaît un premier type de liaison par collage dans lequel les moyens de fixation comportent par exemple au moins une pièce ou une paire de pièces de liaison qui sont fixées par collage au vitrage afin de lier en déplacement le vitrage au dispositif d'entraînement.

Selon un exemple de réalisation de moyens de fixation utilisés pour ce premier type de liaison, les moyens de fixation comportent au moins une pièce de liaison en « Y » (appelée « *holder* » en anglais) qui, d'une part, est fixée audit vitrage par collage et, d'autre part, est reliée au dispositif d'entraînement, généralement par vissage ou autre moyen équivalent.

La pièce de liaison en « Y » comporte par exemple deux flasques qui sont chacun fixés par collage sur l'une des faces du vitrage, respectivement faces interne et externe.

La pièce de liaison en « Y » est agencée au voisinage du bord inférieur situé en dessous de la limite de visibilité, soit dans la zone non visible dissimulée dans la portière, et cela afin de lier en déplacement le vitrage latéral au dispositif d'entraînement.

Ce premier type de liaison par collage nécessite toutefois la mise en oeuvre d'au moins une étape de collage spécifique, postérieurement à l'assemblage du vitrage feuilleté. Sur le plan industriel, la mise en oeuvre d'une telle étape de collage est toujours délicate, notamment la maîtrise de la quantité de colle ou encore le temps nécessaire pour que la colle fixe solidairement la pièce de liaison au vitrage. De plus, le collage pose également parfois des problèmes de tenue dans le temps.

On connaît encore un deuxième type de liaison dans lequel les moyens de fixation sont liés au vitrage par pincement d'une partie du vitrage, uniquement par l'extérieur.

Les moyens de fixation pour une telle liaison du deuxième type sont par exemple similaires à ceux décrits précédemment en ce qu'ils comportent notamment au moins deux pièces qui sont agencées de part et d'autre d'une partie du vitrage située dans la zone non visible.

Les deux pièces assurant le pincement sont par exemple assemblées l'une avec l'autre en dessous du vitrage, généralement par vissage. Ainsi, les pièces sont serrées ensemble à l'une de leur extrémité et de manière à venir, à leur autre extrémité, pincer les faces externe et interne du vitrage avec un effort de serrage propre à garantir la liaison en déplacement entre le vitrage et le dispositif d'entraînement.

Si, par comparaison au premier, ce deuxième type de liaison permet de supprimer l'étape de collage, les moyens de fixation associés présentent parfois un encombrement jugé important, notamment verticalement, ce qui contribue à en limiter l'utilisation. De plus, l'effort de serrage appliqué par de tels moyens de fixation selon ce deuxième type de liaison est important de sorte que, avec le temps, un fluage du matériau polymère formant l'intercalaire peut se produire et impacter la fixation.

On notera cependant que le premier type et le deuxième type de liaison ont en commun de ne pas nécessiter de ménager un ou des trous de fixation dans le vitrage comme cela est le cas avec des moyens de fixation du troisième type de liaison qui sera décrit ci-après.

C'est d'ailleurs (absence de trous) l'une des raisons pour lesquelles, ces premier et deuxième types de liaison sont très majoritairement utilisés pour les vitrages feuilletés.

En effet et par comparaison, le troisième type de liaison se caractérise en outre par le fait qu'un ou des trous de fixation sont ménagés dans le vitrage et sont destinés à recevoir une partie des moyens de fixation associés au vitrage.

Les moyens de fixation pour ce troisième type de liaison comportent par exemple des pièces disposées de part et d'autre de manière à venir serrer le vitrage par l'extérieur (comme dans le deuxième type).

Selon une caractéristique propre à ce troisième type de liaison, les pièces des moyens de fixation sont reliées entre elles à travers le trou de fixation qui est ménagé dans le vitrage, généralement reliées par vissage ou tout autre moyen équivalent.

De tels moyens de fixation comportent par exemple un axe qui traverse le trou de fixation ménagé dans le vitrage.

En raison du et des trous de fixation que doit comporter le vitrage, ce troisième type de liaison est a contrario celui qui est communément utilisé pour les vitrages monolithiques.

Le ou les trous de fixation sont en effet avantageusement réalisés dans le vitrage monolithique avant la trempe de sorte que aucune étape n'est nécessaire après le formage du vitrage pour en assurer la fixation au dispositif d'entraînement.

De plus et par comparaison au premier et deuxième type de liaison, le fait que le vitrage soit traversé par les moyens de fixation est aussi avantageux sur le plan de la sécurité pour garantir notamment que le vitrage reste lié au dispositif d'entraînement en cas de choc(s).

Ainsi, le choix du premier type de liaison et du deuxième type de liaison dans le cas des vitrages feuilletés et du troisième type de liaison dans le cas des vitrages monolithiques résulte notamment de caractéristiques propres à chacun des vitrages.

Néanmoins, le choix de moyens de fixation d'un type donné de liaison en fonction de celui du vitrage n'est plus le seul facteur à prendre en compte, d'autres facteurs ont conduit à faire évoluer ce qui vient d'être présenté.

Une standardisation du dispositif d'entraînement est en particulier de plus en plus recherchée aujourd'hui par les constructeurs automobiles afin de pouvoir indifféremment monter dans la portière d'un véhicule, notamment d'un même modèle, un vitrage latéral de type monolithique ou de type feuilleté, c'est-à-dire d'avoir des vitrages qui soient interchangeables.

C'est l'une des raisons pour lesquelles, on a recherché à appliquer à des vitrages latéraux de type feuilleté le troisième type de liaison, communément utilisé avec des vitrages latéraux de type monolithique, et nécessitant au moins un trou de fixation dans le vitrage.

Dans le cas de ce troisième type de liaison, le vitrage comporte au moins une partie de fixation trouée, parfois deux parties de fixation distinctes selon le vitrage, qui sont réalisées dans la zone non visible située en dessous de la limite de visibilité.

Tel qu'indiqué précédemment, la ou les parties de fixation comportent par conséquent au moins un trou de fixation ménagé à travers le vitrage. Le trou de fixation débouchant sur les deux faces du vitrage est destiné à recevoir des moyens de fixation, lesdits moyens de fixation appliquant des efforts de serrage sur la partie de fixation et étant reliés au dispositif d'entraînement.

Le vitrage feuilleté selon la présente invention est destiné à être utilisé avec une telle liaison du troisième type et comporte par conséquent au moins une partie de fixation comportant un ou des trous de fixation configurés pour recevoir des moyens de fixation avec le dispositif d'entraînement du vitrage.

Par comparaison avec une liaison du premier type, une telle liaison du troisième type avec un vitrage troué permet notamment de supprimer toute opération de collage entre le vitrage et les moyens de fixation.

Par comparaison avec une liaison du deuxième type, une telle liaison du troisième type permet en outre un gain en encombrement.

Toutefois, la mise en oeuvre du troisième type de liaison avec trou de fixation pose avec un vitrage feuilleté des problèmes liés aux caractéristiques de comportement mécanique d'un vitrage feuilleté, lesquels problèmes expliquent d'ailleurs le fait que le premier ou deuxième type de liaison reste la solution de fixation très majoritairement retenue avec de tels vitrages feuilletés.

Tout d'abord, les feuilles de verre d'un vitrage feuilleté destiné à un véhicule automobile présentent une épaisseur faible, généralement inférieure à 2,6 mm dans le cas des feuilles de verre d'un vitrage symétrique. C'est la raison pour laquelle, il n'est pas possible de leur appliquer une opération de trempe analogue à celle mise en oeuvre pour un vitrage monolithique.

La conséquence énoncée précédemment en relation avec le comportement mécanique est qu'un vitrage feuilleté possède des caractéristiques moindres que celles d'un vitrage monolithique, en particulier en terme de résistance aux contraintes et aux chocs.

Or, de telles contraintes et de tels chocs sont appliqués sur la ou les parties de fixation du vitrage d'une part par les moyens de fixation eux-mêmes du fait du serrage et, d'autre part, lors de l'utilisation, par exemple au cours d'un claquement de la portière.

De plus, le ou les trous de fixation réalisés dans chacune des feuilles de verre (avant le formage du vitrage feuilleté) se retrouvent ensuite décalés lors de l'opération d'assemblage avec l'intercalaire et cela en raison des rayons de courbure différents entre les faces extérieure et intérieure. En effet, un vitrage latéral est généralement bombé pour épouser la forme profilée de la carrosserie du véhicule automobile.

Ce phénomène de décalage (ou de désalignement) entre les trous ménagés dans chacune des feuilles de verre du vitrage feuilleté pour obtenir un trou de fixation est encore désigné par le terme anglais « *mismatch* ».

Ce phénomène de décalage a en outre pour conséquence de ne pas permettre une bonne reprise, une bonne répartition, des efforts sur chacune des feuilles de verre du vitrage feuilleté.

Pour tenter de remédier à ces problèmes, des solutions ont été proposées.

L'une des solutions consiste à utiliser un insert qui, introduit dans le trou de fixation, traverse de part en part le vitrage auquel il est fixé par collage. Le document CN104476855 illustre de manière non limitative un exemple de réalisation d'insert selon cette solution.

Une autre solution consiste en une conception particulière du vitrage feuilleté qui, dite « asymétrique », se caractérise par le fait qu'au moins la feuille de verre intérieure, plus courte, ne recouvre pas la ou les autres feuilles du vitrage au niveau de la partie de fixation.

Ainsi, un vitrage asymétrique comporte une feuille de verre intérieure qui n'est pas traversée par les moyens de fixation (du vitrage avec le dispositif d'entraînement) puisque ladite feuille de verre intérieure ne comprend aucun trou de fixation grâce à quoi il n'y a plus de problème de décalage (« *mismatch* »).

La feuille de verre intérieure d'un tel vitrage asymétrique se trouve par conséquent liée au dispositif d'entraînement uniquement par l'intermédiaire des autres feuilles du vitrage, c'est à dire indirectement via l'intercalaire du fait de l'assemblage des feuilles constitutives du vitrage feuilleté.

Sur le plan mécanique, un vitrage feuilleté asymétrique est donc attaché au dispositif d'entraînement essentiellement par la feuille de verre extérieure, laquelle présente alors généralement une épaisseur plus importante.

Il ressort des solutions de l'art antérieur qui viennent d'être présentées différents inconvénients que la présente invention vise à résoudre.

Tout d'abord, ces solutions nécessitent pour nombre d'entre elles mettant en oeuvre des pièces de type « holder » au moins une opération de collage qui doit être mise en oeuvre après la fabrication du vitrage feuilleté, impactant le processus de fabrication et impliquant des coûts supplémentaires.

Ensuite, les solutions précitées impliquent une variation de l'encombrement de la partie de fixation du vitrage feuilleté. En effet, soit une surépaisseur est créée du fait l'utilisation de moyens de fixation, soit c'est inversement une sous-épaisseur dans le cas d'un vitrage de type asymétrique.

L'augmentation de l'encombrement a des conséquences négatives sur les coûts de logistique, impactant les coûts de transport et de stockage.

Ainsi, les solutions connues ne permettent pas d'offrir au constructeur automobile l'interchangeabilité désirée entre vitrage monolithique et vitrage feuilleté en tant que vitrage latéral, laquelle en permettant une standardisation des moyens de fixation, avec le dispositif d'entraînement, voire des moyens d'étanchéité associés au vitrage, est un levier important de réduction des coûts.

Enfin, on a surtout pu constater des problèmes de tenue dans le temps du vitrage feuilleté avec un fluage du matériau polymère de l'intercalaire survenant en raison des efforts de serrage appliqués par les moyens de fixation de part et d'autre du vitrage, autour du trou de fixation.

Pour donner un ordre de grandeur, les efforts de serrage peuvent atteindre des valeurs de l'ordre de 1 à 2 tonnes.

Or, un tel fluage du matériau polymère de l'intercalaire a pour conséquence de modifier la surface d'appui des moyens de fixation. Ainsi, ce fluage est susceptible d'entraîner une casse inopinée au niveau de la partie de fixation ou d'entraîner un manque de rigidité du vitrage du fait de la réduction des efforts de serrage, ce qui est alors particulièrement pénalisant dans le cas d'une portière sans cadre (« *frameless door* »).

Par ailleurs, compte tenu des efforts en jeu, une casse du verre est également susceptible de se produire initialement lors du serrage des moyens de fixation, généralement par vissage, en raison de la concentration des contraintes.

La liberté de conception du vitrage feuilleté s'en trouve limitée dès lors qu'une épaisseur minimale s'avère requise pour éviter qu'une telle casse ne survienne, par exemple on considère qu'une épaisseur au moins égale à 1,6 mm est nécessaire.

US 2005/144862 A1 divulgue un vitrage feuilleté latéral destiné à être monté coulissant dans une portière du véhicule, comportant une feuille de verre extérieure et une feuille de verre intérieure assemblées par un intercalaire adhésif en PVB, ledit adhésif définissant un espacement entre les première et seconde couches de verre; et un module d'engagement sous forme de plaque ayant une partie adaptée pour la liaison dans ledit espacement afin de connecter le vitrage au mécanisme d'ouverture de fenêtre.

La présente invention a notamment pour but de remédier aux inconvénients de l'art antérieur, plus particulièrement de proposer un vitrage feuilleté présentant des caractéristiques améliorées en matière de comportement mécanique, qui soit à même d'être interchangeable avec un vitrage monolithique relié à un dispositif d'entraînement par des moyens de fixation, et cela sans nécessiter aucune opération supplémentaire.

### Résumé de l'invention

Dans ce but, l'invention propose un vitrage feuilleté du type décrit précédemment, caractérisé en ce que le vitrage comporte au moins un insert qui, comportant un trou, est logé dans une découpe complémentaire ménagée dans l'intercalaire, au niveau de la partie de fixation.

Selon l'invention, l'intercalaire comporte au moins une découpe qui est ménagée dans la zone non visible de l'intercalaire correspondant à la partie de fixation du vitrage et qui est destinée à recevoir au moins un insert.

Avantageusement, au moins une partie de l'insert est en contact avec l'intercalaire, avec le pourtour de la découpe.

Avantageusement, l'insert comporte un trou destiné à être traversé par les moyens de fixation du vitrage avec le dispositif d'entraînement.

De préférence, ledit trou ménagé dans l'insert est configuré pour être aligné avec l'axe du trou de fixation du vitrage.

Avantageusement, l'insert comportant le trou est logé dans la découpe lors de l'assemblage du vitrage feuilleté, c'est-à-dire de la feuille de verre extérieure et de la feuille de verre intérieure par l'intermédiaire de l'intercalaire incorporant au moins un insert.

De préférence, l'insert et l'intercalaire sont préalablement liés ensemble pour former un sous-ensemble unitaire afin de faciliter l'assemblage avec les feuilles de verre.

Selon une variante, l'insert ne comporte initialement pas de trou, le trou est réalisé dans l'insert par tous moyens appropriés postérieurement à l'assemblage du vitrage feuilleté, notamment mais non exclusivement lorsque l'insert comporte un noyau.

Avantageusement, l'insert est configuré pour comporter au moins une surface de maintien destinée à coopérer avec la découpe de forme complémentaire de l'intercalaire afin notamment d'améliorer la retenue du vitrage, avant comme en cas de casse.

La coopération de formes entre l'insert et l'intercalaire participe en effet à la retenue du vitrage feuilleté, la surface de maintien de l'insert en contact avec le matériau polymère de l'intercalaire s'opposant tout particulièrement aux efforts d'orientation verticale, c'est à dire l'orientation généralement prépondérante des efforts en raison notamment du fait que le vitrage soit guidé verticalement dans des glissières.

De préférence, l'insert présente par exemple une forme trapézoïdale, ledit insert étant orienté verticalement de manière que l'extrémité supérieure soit la plus large grâce à quoi la surface de maintien est constituée par les bords obliques de l'insert en contact avec ceux de la découpe de l'intercalaire.

Avantageusement, ledit insert est réalisé dans un matériau choisi pour présenter une dureté qui soit supérieure à celle du polyvinylbutyral (PVB), préférentiellement utilisé comme matériau polymère dans l'intercalaire, grâce à quoi on résout les problèmes de fluage du matériau polymère de l'intercalaire qui sont notamment provoqués par les efforts de serrage appliqués localement par les moyens de fixation.

Avantageusement, l'insert forme une entretoise à même de limiter le fluage du matériau polymère au niveau de la partie de fixation du vitrage sollicitée par les moyens de fixation.

De préférence, l'insert est configuré pour présenter une surface latérale qui est supérieure ou égale à celle des moyens de fixation appliquant notamment lesdits efforts de serrage de sorte que les efforts de serrage soient intégralement repris par l'insert agencé dans la partie de fixation du vitrage feuilleté.

Avantageusement, la transmission des efforts est optimisée grâce à l'insert, en particulier celle des efforts de serrage, grâce à quoi le vitrage feuilleté présente une meilleure stabilité, le risque de fluage du polyvinylbutyral (PVB) étant réduit du fait de la suppression des contraintes qui en étaient à l'origine.

Avantageusement, le vitrage feuilleté comporte un ou plusieurs chanfreins ménagés au niveau du trou de fixation destiné à recevoir les moyens de fixation.

De préférence, la feuille de verre extérieure comporte au moins un trou qui est chanfreiné au niveau de l'une et/ou l'autre de ses faces extérieure et intérieure.

De préférence, la feuille de verre intérieure comporte au moins un trou qui est chanfreiné au niveau de l'une et/ou l'autre de ses faces extérieure et intérieure.

Avantageusement, le ou les trous de fixation occupent dans le vitrage feuilleté une position identique à celle occupée dans un vitrage monolithique afin d'offrir une parfaite interchangeabilité entre les deux types de vitrage et cela sans qu'aucune modification ou adaptation ne soit nécessaire.

Avantageusement, le vitrage feuilleté comportant au moins un insert selon l'invention présente la même épaisseur totale que le vitrage monolithique avec lequel il est interchangeable.

A titre non limitatif, pour un vitrage monolithique présentant une épaisseur totale de 4,85 mm, le vitrage feuilleté comporte par exemple une feuille de verre extérieure et une feuille de verre intérieure présentant respectivement une épaisseur de 2,1 mm et assemblées par au moins une feuille de l'intercalaire présentant une épaisseur de 0,65 mm, l'insert présentant une épaisseur sensiblement égale à celle de l'intercalaire.

Les moyens de fixation et le dispositif d'entraînement associé sont ainsi susceptibles d'être standardisés par un constructeur, grâce à quoi il est possible de réduire les coûts et de simplifier la fabrication.

Avantageusement, ledit au moins un insert comportant le trou est inclus dans le vitrage feuilleté lors de la fabrication, c'est-à-dire logé dans la découpe de l'intercalaire situé entre la feuille de verre extérieure et la feuille de verre intérieure, de sorte qu'aucune opération supplémentaire n'est requise, notamment aucune opération de collage de l'insert postérieure à la fabrication.

Avantageusement, l'insert est apte à transmettre aux moyens de fixation les efforts survenant notamment en cas de choc(s) et tout particulièrement dans la partie de fixation, participant ainsi à garantir la retenue du vitrage feuilleté.

Avantageusement, l'insert est agencé uniquement dans la zone non visible du vitrage de sorte que le matériau constituant l'insert peut être librement choisi, notamment en fonction des caractéristiques recherchées de comportement mécanique, tout particulièrement de dureté.

Avantageusement, l'insert permet de renforcer, localement au niveau de la partie de fixation, la résistance du vitrage feuilleté. Par comparaison avec l'art antérieur, ladite résistance du vitrage aux efforts de serrage n'est notamment plus limitée par la dureté de la feuille en matériau polymère formant l'intercalaire, typiquement celle du polyvinylbutyral (PVB).

L'insert participe avantageusement à renforcer la rigidité de la partie de fixation du vitrage en combinaison avec au moins la feuille de verre extérieure traversée par le trou de fixation, voire en combinaison avec la feuille de verre extérieure et la feuille de verre intérieure pour un vitrage feuilleté du type symétrique.

L'insert est solidaire du vitrage feuilleté sans nécessiter de collage, tout ou au moins une partie de l'insert étant serrée entre la feuille de verre extérieure et la feuille de verre intérieure du vitrage.

Dans la partie de fixation sur laquelle les moyens de fixation appliquent un effort de serrage, en l'absence d'intercalaire du fait de la découpe, l'insert est directement en contact avec chacune desdites feuilles de verre sans interposition d'aucune matière susceptible de fluer telle que le matériau polymère de l'intercalaire ou encore de la colle.

Le vitrage feuilleté est relié au dispositif d'entraînement par des moyens de fixation qui traversent au moins la feuille de verre extérieure et l'insert, voire également la feuille de verre intérieure.

### Selon d'autres caractéristiques de l'invention :

- l'insert comporte une face extérieure qui est en contact direct avec une face intérieure de la feuille de verre extérieure et une face intérieure dont tout ou au moins une partie est en contact direct avec une face extérieure de la feuille de verre intérieure ;
- l'insert est réalisé dans un matériau présentant une dureté supérieure à celle de l'intercalaire comportant au moins ladite feuille en matériau polymère, notamment une feuille en polyvinylbutyral (PVB), ledit matériau de l'insert présentant par exemple une dureté Shore D comprise entre 70 et 90 ;
- ledit insert est réalisé dans un matériau plastique, notamment en polyamide (PA), par exemple du PA 6-6, en polyoxyméthylène (*aussi appelé polyformaldéhyde ou polyacétal*) (POM), en polybutylène téréphtalate (PBT), en polyéthylène téréphtalate (PET), ou dans un matériau métallique, par exemple de l'acier ;
- le trou est formé dans l'insert après assemblage desdites feuilles du vitrage ;
- le trou de l'insert présente un diamètre compris entre 10 mm et 30 mm, préférentiellement entre 15 mm et 25 mm ;
- l'insert comporte une douille qui, s'étendant suivant l'axe O, est configurée pour traverser au moins une partie de la feuille de verre extérieure munie d'un trou et/ou de la feuille de verre intérieure munie d'un trou ;
- l'insert comporte un noyau s'étendant en saillie par rapport à l'une et/ou l'autre des faces extérieure et intérieure de l'insert, ledit noyau étant destiné à être percé pour former la douille que traverse ledit trou, préférentiellement percé après assemblage desdites feuilles du vitrage ;
- l'insert présente une épaisseur qui est égale à plus ou moins 10% de l'épaisseur de l'intercalaire, préférentiellement égale à plus ou moins 5% de l'épaisseur de l'intercalaire et encore plus préférentiellement à plus ou moins 2% de l'épaisseur de l'intercalaire ;
- l'intercalaire est configuré pour former une entretoise entre la feuille de verre extérieure et la feuille de verre intérieure de manière à limiter le fluage du matériau polymère de ladite au moins une feuille de l'intercalaire, notamment lors de l'assemblage du vitrage ou lors de l'utilisation du vitrage feuilleté comme vitrage latéral ;
- la feuille de verre intérieure comporte au moins une découpe ménagée dans la partie de fixation du vitrage de manière que les moyens de fixation coopèrent avec l'insert sans contact avec ladite feuille en verre ;
- la découpe de la feuille de verre intérieure présente des dimensions inférieures à celles de l'insert de manière que l'insert coopère autour de ladite découpe avec une partie d'une face extérieure de la feuille de verre intérieure ;
- l'insert comporte au moins une partie configurée pour former une surface de maintien apte à le retenir verticalement en position, ledit insert présentant par exemple une forme trapézoïdale ou une forme en « T » ;
- le vitrage feuilleté est du type symétrique, ladite au moins une partie de fixation du vitrage comportant la feuille de verre extérieure, l'insert et la feuille de verre intérieure ;
- l'insert comporte des moyens de désaération configurés pour permettre une évacuation de l'air contenu dans l'intercalaire lors de l'assemblage du vitrage feuilleté ;
   -- ladite au moins une partie de fixation du vitrage comporte au moins la feuille de verre extérieure et l'insert, non recouverte par la feuille de verre intérieure ;
   -- la feuille de verre extérieure comportant une face extérieure et une face intérieure, la feuille de verre extérieure comporte au moins un trou qui est chanfreiné au niveau de l'une et/ou l'autres desdites faces ;
   -- la feuille de verre intérieure comportant une face extérieure et une face intérieure, la feuille de verre extérieure comporte au moins un trou qui est chanfreiné au niveau de l'une et/ou l'autres desdites faces.

### Brève description des figures

D'autres caractéristiques et avantages de l'invention apparaitront au cours de la lecture de la description détaillée qui va suivre pour la compréhension de laquelle on se reportera aux dessins annexés dans lesquels :

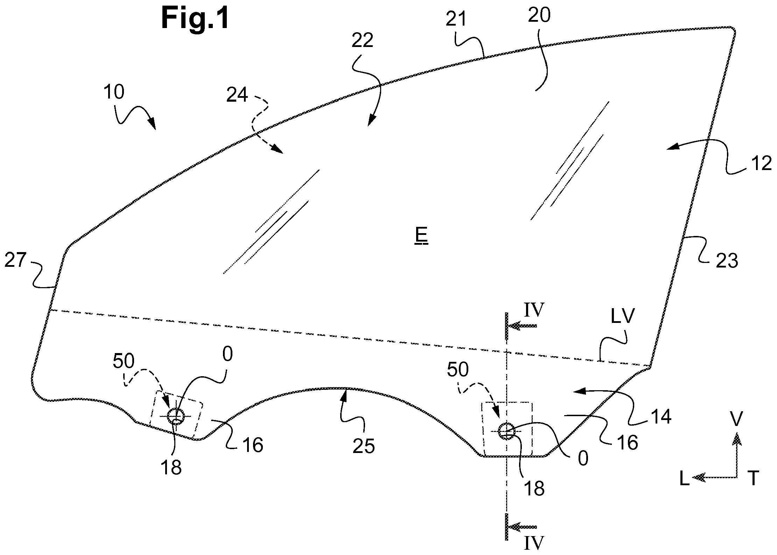

[Fig. 1] La figure 1 est une vue de côté qui représente, de l'extérieur, un vitrage feuilleté pour un véhicule automobile selon un premier mode de réalisation et qui illustre la feuille de verre extérieure du vitrage feuilleté comportant dans sa zone non visible deux parties de fixation avant et arrière munies chacune d'un trou de fixation destiné à recevoir des moyens de fixation du vitrage avec un dispositif d'entraînement, lesdites parties de fixation comportant chacune un insert logé dans une découpe de l'intercalaire et visible par transparence à travers la feuille de verre extérieure ;

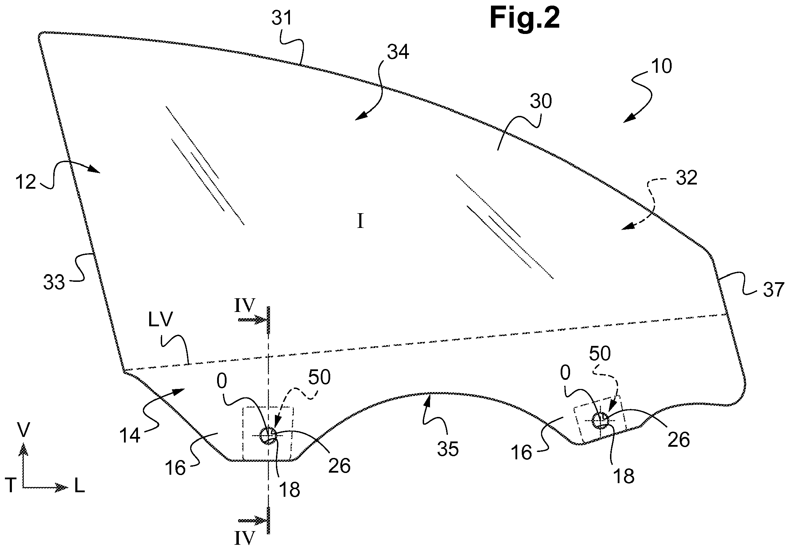

[Fig. 2] La figure 2 est une vue de côté qui représente, de l'intérieur, le vitrage feuilleté selon la figure 1 et qui illustre en outre les deux parties de fixation du vitrage feuilleté comportant chacune un insert logé dans la découpe de l'intercalaire et visible par transparence, lesdites parties de fixation étant recouvertes par la feuille de verre intérieure pour former un vitrage latéral de type symétrique ;

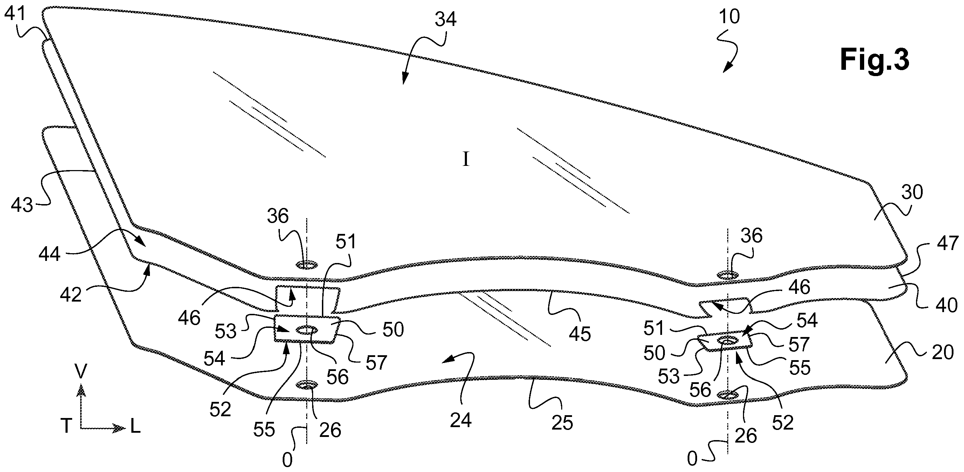

[Fig. 3] La figure 3 est une vue en perspective qui représente, en éclaté, le vitrage feuilleté selon le premier mode de réalisation des figures 1 et 2 et qui illustre, au niveau de chacune des parties de fixation avant et arrière du vitrage, la découpe ménagée dans la feuille en matériau polymère de l'intercalaire et destinée à recevoir l'insert de forme complémentaire, ladite découpe et l'insert présentant une forme trapézoïdale ;

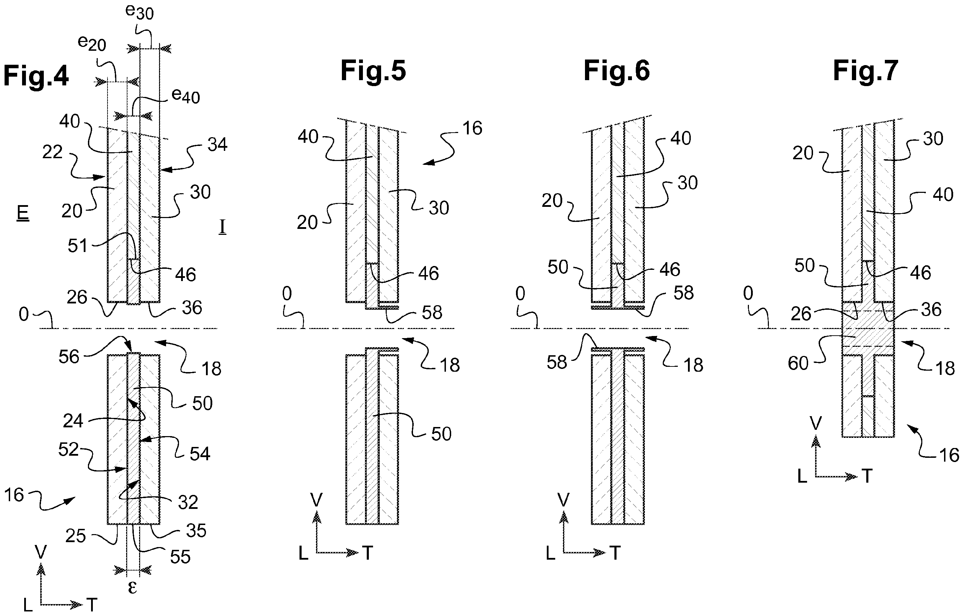

[Fig. 4] La figure 4 est une vue en coupe selon le plan IV-IV représenté sur les figures 1 et 2 qui représente l'une arrière des parties de fixation du vitrage feuilleté selon le premier mode de réalisation et qui illustre l'insert comportant un trou aligné sur l'axe O et destiné à être traversé par les moyens de fixation ;
[Fig. 5] La figure 5 est une vue en coupe analogue à celle de la figure 4 qui représente l'une des parties de fixation du vitrage feuilleté et qui illustre une première variante de réalisation de l'insert dans laquelle l'insert comporte une douille qui s'étend latéralement à l'intérieur du trou de fixation d'un seul côté, ici à travers la feuille de verre intérieure ;
[Fig. 6] La figure 6 est une vue en coupe similaire à celle de la figure 4 ou 5 qui représente l'une des parties de fixation du vitrage feuilleté et qui illustre une deuxième variante de réalisation de l'insert dans laquelle l'insert comporte une douille qui s'étend transversalement de chaque côté, à l'intérieur du trou de fixation, respectivement à travers la feuille de verre extérieure et la feuille de verre intérieure ;
[Fig. 7] La figure 7 est une vue en coupe qui, similaire aux figures 4 à 6, représente l'une des parties de fixation du vitrage feuilleté et qui illustre une troisième variante de réalisation de l'insert dans laquelle l'insert comporte un noyau s'étendant en saillie de part et d'autre et apte, après assemblage, à être percé pour obtenir une douille analogue à celle de la figure 6 ;

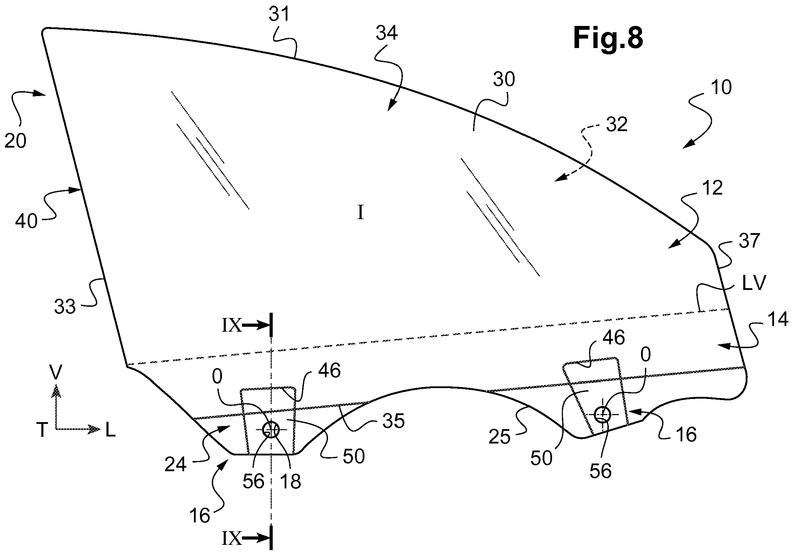

[Fig. 8] La figure 8 est une vue de côté qui représente, de l'intérieur, le vitrage feuilleté selon un deuxième mode de réalisation du vitrage feuilleté et qui illustre en outre les deux parties de fixation du vitrage feuilleté comportant chacune un insert logé dans une découpe de l'intercalaire et visible par transparence, lesdites parties de fixation n'étant pas recouverte par la feuille de verre intérieure du vitrage latéral qui est du type asymétrique ;

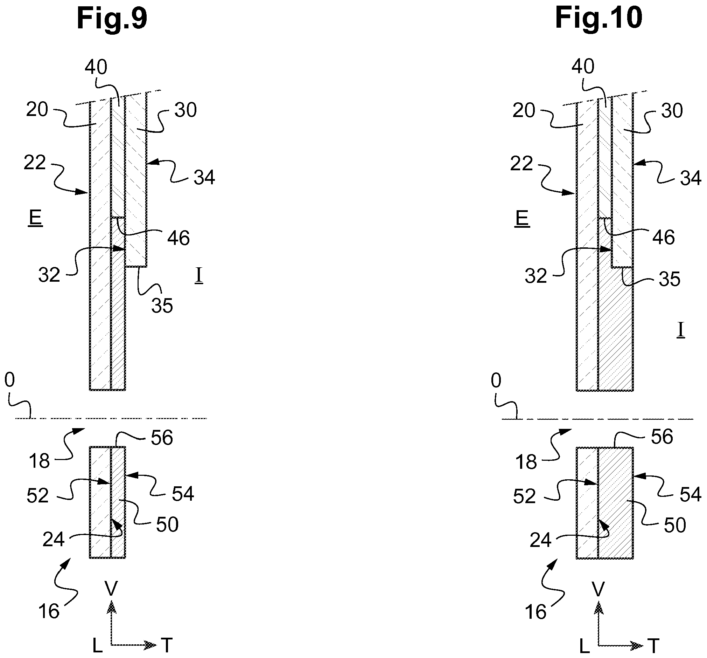

[Fig. 9] La figure 9 est une vue en coupe selon le plan IX-IX représenté sur la figure 8 qui représente l'une arrière des parties de fixation du vitrage feuilleté selon la figure 8 et qui illustre l'insert (analogue à celui des figures 1 à 4) dont au moins une partie supérieure est recouverte par la feuille de verre intérieure ;
[Fig. 10] La figure 10 est une vue en coupe qui, analogue à la figure 9, représente l'une arrière des parties de fixation du vitrage feuilleté et qui illustre une variante de réalisation d'un insert présentant une forme étagée dont au moins une partie plus épaisse est configurée pour s'étendre transversalement en dessous de la feuille de verre intérieure du vitrage latéral du type asymétrique de sorte que l'épaisseur de la partie de fixation du vitrage soit identique à celle du reste du vitrage ;

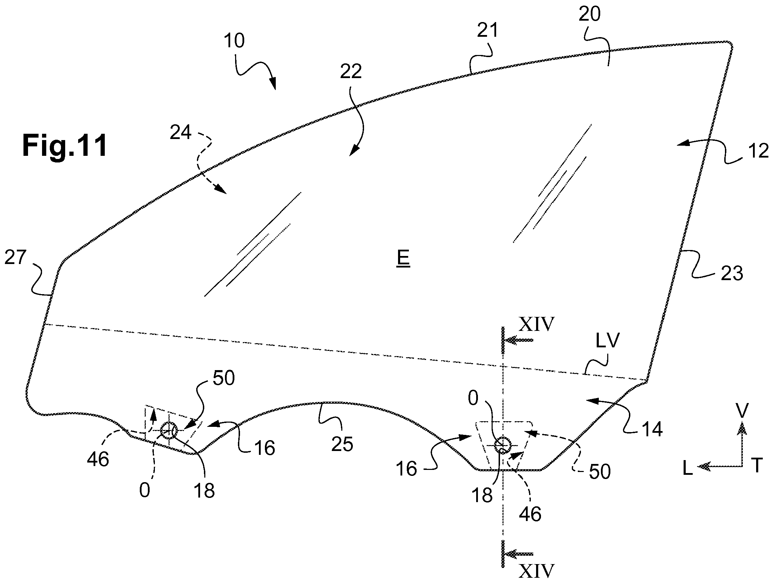

[Fig. 11] La figure 11 est une vue de côté qui, similaire à la figure 1, représente de l'extérieur un vitrage feuilleté pour un véhicule automobile de type symétrique selon un troisième mode de réalisation dans lequel une découpe est ménagée dans la feuille de verre intérieure et qui illustre la feuille de verre extérieure du vitrage feuilleté comportant dans sa zone non visible deux parties de fixation comportant chacune un insert logé dans une découpe de l'intercalaire, analogue à celui du premier mode de réalisation, et visible par transparence à travers la feuille de verre extérieure ;

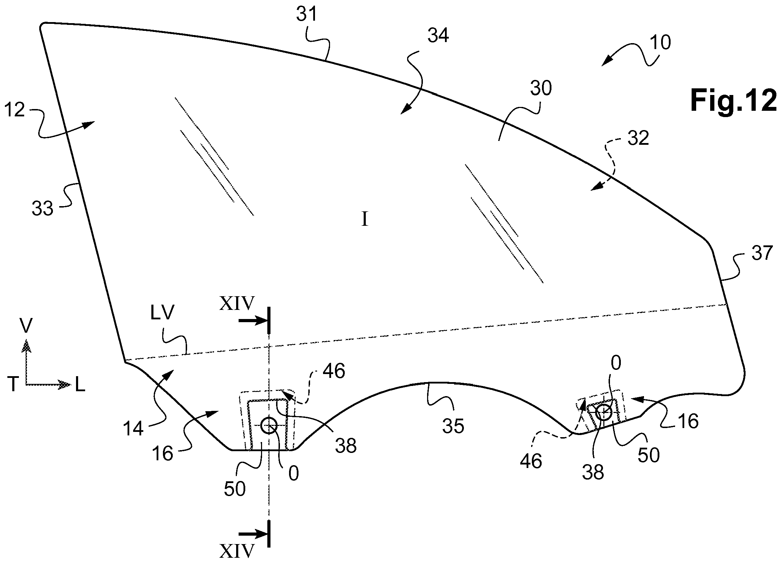

[Fig. 12] La figure 12 est une vue de côté qui représente, de l'intérieur, le vitrage feuilleté selon la figure 10 dont les parties de fixation sont recouvertes par la feuille de verre intérieure sauf localement dans la zone correspondant à ladite découpe et qui illustre les deux parties de fixation du vitrage feuilleté comportant chacune un insert rendu en partie visible en raison de ladite découpe ménagée dans la feuille de verre intérieure ;

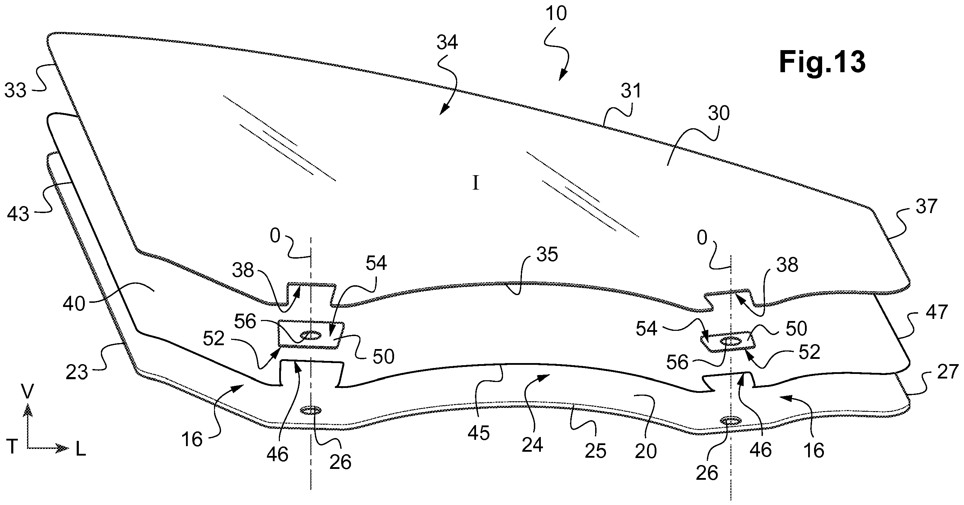

[Fig. 13] La figure 13 est une vue en perspective qui représente, en éclaté, le vitrage feuilleté selon le troisième mode de réalisation des figures 11 et 12 et qui illustre, au niveau de chacune des parties de fixation avant et arrière du vitrage, d'une part la découpe ménagée dans la feuille en matériau polymère de l'intercalaire pour recevoir l'insert de forme complémentaire et, d'autre part, la découpe ménagée dans la feuille de verre intérieure pour que les efforts de serrage appliqués par les moyens de fixation le soient sur l'insert ;

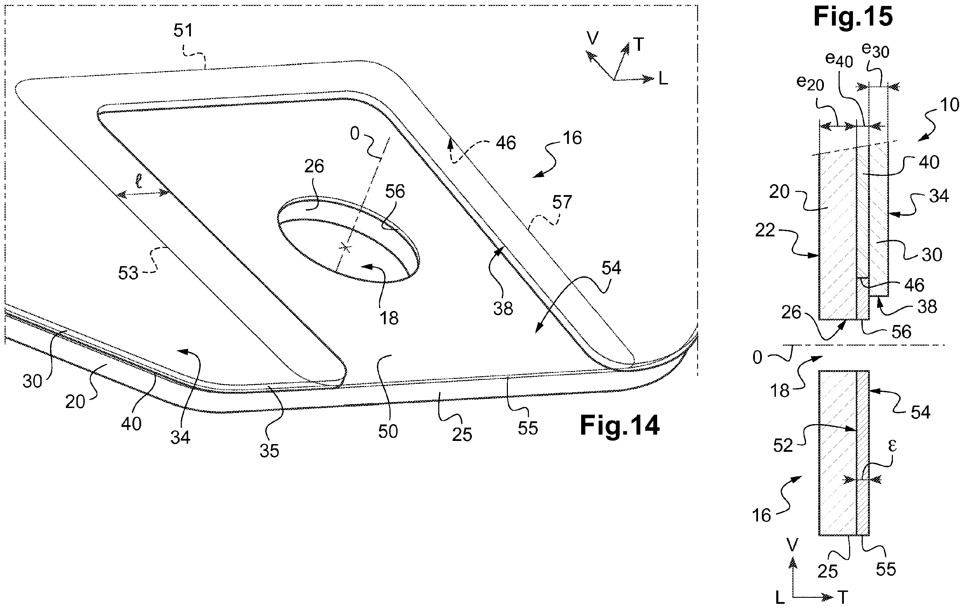

[Fig. 14] La figure 14 est une vue en perspective qui représente en détail une des parties de fixation du vitrage et qui illustre la découpe ménagée dans la feuille de verre intérieure qui est configurée pour présenter des dimensions inférieures à celles de l'insert ;
[Fig. 15] La figure 15 est une vue en coupe qui représente l'une arrière des parties de fixation du vitrage feuilleté selon les figures 11 à 14 et qui illustre la découpe ménagée localement dans la feuille de verre intérieure et l'insert logé dans la découpe que comporte l'intercalaire ;

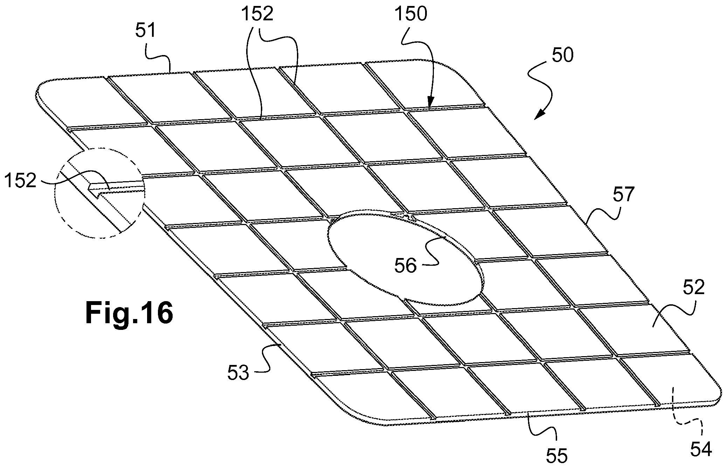

[Fig. 16] La figure 16 est une vue en perspective qui représente un insert comportant des moyens de désaération et qui en illustre un exemple de réalisation desdits moyens de désaération sous la forme d'un réseau de stries ménagées dans au moins l'une des faces de l'insert, ici la face extérieure.

### Description détaillée de l'invention

Dans la description détaillée qui suit, on utilisera de manière non limitative en référence au trièdre (L, V, T) représenté sur les figures, les orientations longitudinale, verticale et transversale.

Par convention, on utilisera dans la description les termes « avant » et « arrière » en référence à l'orientation longitudinale, les termes « supérieur » et « inférieur », ou « haut » et « bas », en référence à l'orientation verticale et les termes « extérieur » et « intérieur » ou « externe » et « interne » en référence à l'orientation transversale dudit trièdre (L, V, T).

Dans la suite de la description, les modes de réalisation et/ou variantes de l'invention seront avantageusement décrits par comparaison et, sur les figures, des éléments présentant des fonctions analogues ou des structures identiques seront désignés par une même référence.

On a représenté sur les figures 1 à 4 un premier mode de réalisation d'un vitrage 10 feuilleté pour un véhicule automobile selon l'invention.

Le vitrage 10 feuilleté selon l'invention sera décrit à titre d'exemple non limitatif dans le cadre d'une application comme vitrage latéral.

Un tel vitrage latéral est destiné à être monté coulissant, selon l'orientation verticale, dans une portière (non représentée) du véhicule. Le vitrage latéral est destiné à fermer une baie que comporte la portière du véhicule.

Dans une telle application pour un véhicule automobile, le vitrage 10 réalise alors une séparation entre un espace E qui est extérieur au véhicule et un espace intérieur I qui est intérieur au véhicule. Ainsi, les termes « extérieur » et « intérieur » appliqués ci-après au vitrage 10 feuilleté le sont conformément à cette notion d'espace extérieur et intérieur.

Les figures 1 à 4 illustrent plus particulièrement ledit vitrage 10 feuilleté successivement en vue de côté de l'extérieur et de l'intérieur puis en éclaté et, partiellement, en coupe.

Le vitrage 10 feuilleté comporte une zone 12, dite visible, et une zone 14, dite non visible, qui s'étendent de part et d'autre d'une limite LV de visibilité du vitrage, la zone 14 non visible correspondant à une partie inférieure du vitrage dissimulée en permanence dans la portière.

On a représenté, sur les figures 1 et 2, la limite LV de visibilité en pointillés afin de la matérialiser.

La limite LV de visibilité correspond généralement à celle du positionnement d'un joint lécheur monté solidaire de la portière, ledit joint lécheur étant agencé pour coopérer avec le vitrage 10 feuilleté, en particulier lorsque ledit vitrage 10 est monté coulissant relativement à la portière.

Le vitrage 10 feuilleté comporte, dans ladite zone 14 non visible située en dessous de la limite LV de visibilité, au moins une partie 16 de fixation qui comporte au moins un trou 18 de fixation destiné à recevoir des moyens de fixation du vitrage 10 avec un dispositif d'entraînement (non représenté) dudit vitrage 10.

Le vitrage 10 feuilleté comporte au moins un trou 18 de fixation qui présente un axe 0 d'orientation transversale selon le trièdre (L, V, T) représenté sur les figures.

Les moyens de fixation entre le vitrage 10 et le dispositif d'entraînement comportent par exemple au moins un axe destiné à traverser la partie 16 de fixation du vitrage 10 par ledit au moins un trou 18 de fixation. Les moyens de fixation associés au vitrage 10 sont par exemple des moyens de fixation avec vissage pour réaliser une liaison du troisième type selon l'art antérieur présenté précédemment.

De manière connue, de tels moyens de fixation sont configurés pour être rendus solidaires du vitrage 10, appliquant transversalement du fait du vissage des efforts de serrage sur chacune des parties 16 de fixation.

Le dispositif d'entraînement (parfois appelé « lève-vitre ») est commandé sélectivement pour déplacer, suivant un mouvement de translation, ledit vitrage 10 en hauteur entre au moins une position haute, dite de fermeture, de la baie de la portière et une position basse, dite d'ouverture de tout ou partie de ladite baie.

Selon le premier mode de réalisation, le vitrage 10 feuilleté comporte ici deux parties 16 de fixation, respectivement une première partie 16 de fixation située vers l'avant et une deuxième partie 16 de fixation située vers l'arrière.

Les première et deuxième parties 16 de fixation sont par exemple formées par des excroissances, séparées l'une de l'autre selon l'orientation longitudinale.

De préférence, chacune desdites première et deuxième parties 16 de fixation comporte au moins un trou 18 de fixation.

En variante non représentée, l'une seulement desdites première et deuxième parties 16 de fixation comporte un trou 18 de fixation, de préférence celle des parties 16 de fixation qui est située à l'arrière du vitrage 10.

Selon cette variante, l'autre partie 16 de fixation située à l'avant du vitrage 10 ne comporte donc pas de trou 18 de fixation mais coopère avec des moyens de fixation pour réaliser une liaison du premier ou du deuxième type décrit précédemment.

Ainsi, un même vitrage 10 feuilleté peut comporter des moyens de fixation différents, soit selon l'exemple une liaison du premier ou deuxième type à l'avant et une liaison du troisième type à l'arrière dont les moyens de fixation traversent un trou 18 de fixation du vitrage 10.

En variante non représentée, le vitrage 10 feuilleté comporte une seule partie 16 de fixation, ladite partie 16 de fixation comportant par exemple au moins un trou 18 de fixation, préférentiellement deux trous 18 de fixation espacés l'un de l'autre selon la direction longitudinale destinés à recevoir des moyens de fixation pour réaliser une liaison du troisième type telle que présenté précédemment.

Le nombre de partie 16 de fixation du vitrage 10 est, comme la forme de ce dernier, déterminé en fonction de l'application, c'est-à-dire du véhicule automobile, tout comme le nombre de trou 18 de fixation est déterminé en fonction du dispositif d'entraînement du vitrage.

Tel qu'illustré sur les figures 1 à 4, le vitrage 10 feuilleté comporte au moins une feuille 20 de verre extérieure et une feuille 30 de verre intérieure qui sont assemblées par l'intermédiaire d'un intercalaire 40.

Le vitrage 10 feuilleté utilisé ici comme vitrage latéral est délimité par un pourtour de forme globalement parallélépipédique.

La feuille 20 de verre extérieure comporte une face 22 extérieure et une face 24 intérieure, respectivement orientées vers l'espace E extérieur et vers l'espace I intérieur.

Tel qu'illustré sur la figure 1, la feuille 20 de verre extérieure comporte successivement un bord 21 supérieur, un bord 23 arrière, un bord 25 inférieur et un bord 27 avant, lesdits bord 21 supérieur et bord 25 inférieur opposés s'étendant globalement selon l'orientation longitudinale et lesdits bord 23 arrière et bord 27 avant opposés s'étendant globalement selon l'orientation verticale.

Le bord 25 inférieur de la feuille 20 de verre extérieure présente centralement, entre deux excroissances formant lesdites parties 16 de fixation, un tronçon curviligne formant un profil concave orienté vers le bas.

De préférence, la feuille 20 de verre extérieure comporte un trou 26 traversant dans chacune desdites parties 16 de fixation, en variante dans au moins l'une desdites parties 16 de fixation.

Avantageusement, le trou 26 de la feuille 20 de verre extérieure est chanfreiné au niveau de l'une et/ou l'autres desdites faces, respectivement la face 22 extérieure et la face 24 intérieure.

Selon le type du vitrage 10 feuilleté, symétrique ou asymétrique, ladite au moins une partie 16 de fixation est susceptible d'être notamment constituée par tout ou une partie seulement des feuilles constituant ledit vitrage 10.

La feuille 30 de verre intérieure comporte une face 32 extérieure et une face 34 intérieure, respectivement orientées vers l'espace E extérieur et vers l'espace I intérieur.

Tel qu'illustré sur la figure 2, la feuille 30 de verre intérieure comporte successivement un bord 31 supérieur, un bord 33 arrière, un bord 35 inférieur et un bord 37 avant, lesdits bord 31 supérieur et bord 35 inférieur opposés s'étendant globalement selon l'orientation longitudinale et lesdits bord 33 arrière et bord 37 avant opposés s'étendant globalement selon l'orientation verticale.

Le vitrage 10 feuilleté illustré aux figures 1 à 4 est un vitrage symétrique, c'est-à-dire un vitrage dans lequel la feuille 30 de verre intérieure recouvre totalement la feuille 20 de verre extérieure, lesdites feuilles de verre étant de dimensions identiques.

Ainsi, les parties 16 de fixation du vitrage 10 sont constituées par la feuille 20 de verre extérieure, l'intercalaire 40 et la feuille 30 de verre extérieure comme l'illustre en détail la coupe de la figure 4 selon le plan IV-IV représenté sur les figures 1 et 2.

De préférence, la feuille 20 de verre extérieure et la feuille 30 de verre intérieure sont ici de même épaisseur, la feuille 20 de verre extérieure présentant selon l'orientation transversale une épaisseur « e20 » qui est égale à l'épaisseur « e30 » de la feuille 30 de verre intérieure.

En variante, la feuille 30 de verre intérieure est plus mince que la feuille 20 de verre extérieure, c'est-à-dire présente une épaisseur « e30 » inférieure à l'épaisseur « e20 ».

Le bord 35 inférieur comporte un profil complémentaire de celui du bord 25 inférieur de la feuille 20 de verre extérieure. Ainsi, le bord 35 inférieur de la feuille 30 de verre intérieure présente centralement un tronçon curviligne formant un profil concave orienté vers le bas.

De préférence, la feuille 30 de verre intérieure comporte un trou 36 traversant dans chacune desdites parties 16 de fixation, en variante dans au moins l'une desdites parties 16 de fixation.

Avantageusement, le trou 36 de la feuille 30 de verre intérieure est chanfreiné au niveau de l'une et/ou l'autre desdites faces, respectivement la face 32 extérieure et la face 34 intérieure.

Avantageusement, le trou 26 de la feuille 20 de verre extérieure et le trou 36 de la feuille de verre intérieure présentent un axe qui est coaxial à l'axe O du trou 18 de fixation du vitrage.

L'intercalaire 40 comporte au moins une feuille en matériau polymère, l'intercalaire 40 reliant ensemble la feuille 20 de verre extérieure et la feuille 30 de verre intérieure du vitrage 10.

Dans ce premier mode de réalisation, l'intercalaire 40 comporte une seule feuille en matériau polymère. De préférence, ladite feuille en matériau polymère formant l'intercalaire 40 est une feuille en polyvinylbutyral (PVB).

En variante, l'intercalaire 40 est une structure multicouche, c'est-à-dire constituée de plus d'une feuille. L'intercalaire 40 comporte par exemple deux feuilles en matériau polymère telles qu'une première feuille et une deuxième feuille respectivement en polyvinylbutyral (PVB) dont l'une présente avantageusement des propriétés d'atténuation acoustique. Cette structure multicouche formant l'intercalaire 40 est encore appelée, selon le terme anglais, « *bilayer* ».

L'intercalaire 40 pourrait aussi comporter plus de deux feuilles et par exemple être constitué de trois feuilles en matériau polymère, soit un « *trilayer* », comportant par exemple une feuille en polyethylene terephtalate (PET) disposée entre deux feuilles de polyvinylbutyral (PVB) dont l'une présente avantageusement des propriétés d'atténuation acoustique ou encore une feuille de polyvinylbutyral (PVB) qui, présentant avantageusement des propriétés d'atténuation acoustique, est disposée entre deux autres feuilles de polyvinylbutyral (PVB).

Tel qu'illustré sur la figure 3, l'intercalaire 40 comporte une face 42 extérieure située en vis-à-vis de la face 24 intérieure de la feuille 20 de verre extérieure et une face 44 intérieure située en vis-à-vis de la face 32 extérieure de la feuille 30 de verre intérieure.

L'intercalaire 40 comporte successivement un bord 41 supérieur, un bord 43 arrière, un bord 45 inférieur et un bord 47 avant, lesdits bord 41 supérieur et bord 45 inférieur opposés s'étendant globalement selon l'orientation longitudinale et lesdits bord 43 arrière et bord 47 avant opposés s'étendant globalement selon l'orientation verticale.

L'intercalaire 40 s'étend dans la partie 14 non visible, c'est-à-dire en dessous de la limite LV de visibilité du vitrage 10.

L'intercalaire 40 comporte au moins une découpe 46 qui est ménagée au niveau de la partie 16 de fixation du vitrage 10, ladite découpe 46 étant destinée à recevoir un insert 50.

Avantageusement, au moins une partie de l'insert 50 est en contact avec l'intercalaire 40, avec le pourtour de la découpe 46 ménagée dans l'intercalaire 40 pour le recevoir. Dans ce premier mode de réalisation, l'intercalaire 40 comporte deux découpes 46 qui sont respectivement agencées dans les deux parties 16 de fixation avant et arrière du vitrage 10.

De préférence, la découpe 46 présente une forme ouverte verticalement vers le bas, débouchant ainsi dans le bord 45 inférieur de l'intercalaire 40.

L'intercalaire 40 présente transversalement une épaisseur e40. De préférence, l'épaisseur e40 de l'intercalaire est comprise entre 0,3 mm et 1,2 mm.

La forme de la découpe 46 de l'intercalaire 40 et celle de l'insert 50 sont avantageusement complémentaires de manière que au moins une partie du pourtour de la découpe 46 soit en contact avec l'insert 50.

En variante, la totalité de l'insert 50 est en contact avec l'intercalaire 40, la découpe 46 étant alors une forme fermée à l'intérieur de laquelle l'insert 50 de forme complémentaire est logé, c'est-à-dire inséré.

Avantageusement, l'insert 50 évite ainsi le risque de fluage du matériau polymère de ladite au moins une feuille formant l'intercalaire 40 au moins lors de l'assemblage de la feuille 20 de verre extérieure et la feuille 30 de verre intérieure par l'intermédiaire de l'intercalaire 40 afin d'obtenir le vitrage 10 feuilleté.

De préférence, l'insert 50 est logé dans la découpe 46 lors de la fabrication du vitrage 10, soit avant d'assembler la feuille 20 de verre extérieure et la feuille 30 de verre intérieure par l'intermédiaire de l'intercalaire 40.

L'intercalaire 40 et l'insert 50 peuvent être des éléments indépendants, l'intercalaire 40 étant alors mis en place sur l'une des feuilles 20, 30 de verre puis un insert 50 logé dans chaque découpe 46, avant de placer l'autre des feuilles 20, 30 de verre pour finaliser le préassemblage.

Avantageusement, l'insert 50 et l'intercalaire 40 sont liés ensemble pour former un sous-ensemble unitaire préalablement à l'assemblage en vue d'obtenir le vitrage 10 feuilleté.

De préférence, l'insert 50 et l'intercalaire 40 sont liés au moyen de ruban adhésif. A titre d'exemple non limitatif, on utilise un ruban adhésif simple face, notamment en acrylique, présentant une épaisseur qui est inférieure à 0,5 mm, préférentiellement inférieure à 0,3 mm, encore plus préférentiellement inférieure ou égale à 0,15 mm.

Un tel sous-ensemble unitaire formé de l'intercalaire 40 et ici des deux inserts 50 permet de faciliter sa mise en place entre la feuille 20 de verre extérieure et la feuille 30 de verre intérieure lors du préassemblage et garantit en outre le bon positionnement de l'insert 50 par rapport à la découpe 46 de l'intercalaire 40.

De préférence, l'insert 50 est principalement constitué d'une pièce plane présentant une épaisseur « ε ».

L'épaisseur ε de l'insert 50 est égale à plus ou moins 10% à l'épaisseur e40 de l'intercalaire 40, préférentiellement égale à plus ou moins 5% et encore plus préférentiellement à plus ou moins 2% de ladite épaisseur e40.

Avantageusement, l'insert 50 est susceptible de former une entretoise apte à limiter le fluage du matériau polymère de ladite au moins une feuille de l'intercalaire 40, notamment lors de l'assemblage du vitrage 10 ou ultérieurement en raison des efforts de serrage appliqués par les moyens de fixation.

En effet, étant en contact direct avec la feuille 20 de verre extérieure et la feuille 30 de verre intérieure, l'insert 50 garantit alors une stabilité dimensionnelle dans le temps par comparaison notamment au matériau polymère de l'intercalaire 40 sujet au fluage en raison des efforts appliqués par les moyens de fixation.

De préférence, l'insert 50 est réalisé dans un matériau plastique ou dans un matériau métallique, par exemple de l'acier, ledit matériau de l'insert 50 présentant une dureté supérieure à celle de ladite au moins une feuille en matériau polymère de l'intercalaire 40.

Avantageusement, l'insert 50 est réalisé dans un matériau plastique, notamment en polyamide (PA) par exemple du PA 6-6, en polyoxyméthylène (POM) (*aussi appelé polyformaldéhyde ou polyacétal*), en polybutylène téréphtalate (PBT), en polyéthylène téréphtalate (PET).

Avantageusement, le matériau de l'insert 50 présente une dureté Shore D qui est comprise entre 70 et 90.

Tel qu'illustré sur la figure 4, l'insert 50 comporte une face 52 extérieure qui est en contact direct avec la face 24 intérieure de la feuille 20 de verre extérieure et une face 54 intérieure qui est en contact direct avec une face 32 extérieure de la feuille 30 de verre intérieure.

Ainsi, la face 52 extérieure coopère avec la face 24 intérieure de la feuille 20 de verre extérieure et la face 54 intérieure coopère avec la face 32 extérieure de la feuille 30 de verre intérieure et cela sans interposition d'aucune matière entre l'insert 50 et lesdites feuilles 20, 30 de verre, en particulier ni matériau polymère de l'intercalaire 40 grâce à la découpe 46, ni encore de colle par exemple.

De préférence, la face 52 extérieure et la face 54 intérieure de l'insert 50 sont planes pour former une surface d'appui pour le serrage par les moyens de fixation, comme le sont également la face 24 intérieure de la feuille 20 de verre extérieure et la face 32 extérieure de la feuille 30 de verre intérieure.

Dans ce premier mode de réalisation avec un vitrage 10 feuilleté du type symétrique, la totalité de la face 52 extérieure et de la face 54 intérieure sont en contact avec la face 24 intérieure de la feuille 20 de verre extérieure et la face 32 extérieure de la feuille 30 de verre intérieure respectivement.

La face 52 extérieure et la face 54 intérieure de l'insert 50 sont par exemple lisses, de sorte que chacune desdites faces 52, 54 présente une surface qui est intégralement et directement en contact avec la face 24 intérieure ou la face 54 extérieure de la feuille 20 ou 30 de verre située en vis-à-vis.

Avantageusement, l'insert 50 selon l'invention n'est pas lié au vitrage par collage contrairement à l'état de la technique selon notamment le premier type de liaison, en particulier aucun collage entre l'insert 50 et la feuille 20 de verre extérieure et la feuille 30 de verre intérieure.

Avantageusement, l'insert 50 comporte des moyens 150 de désaération (figure 16) qui sont configurés pour permettre une évacuation de l'air contenu dans l'intercalaire 40 lors du désaérage réalisé au cours de l'assemblage du vitrage 10 feuilleté, c'est à dire de la feuille 20 de verre extérieure et la feuille 30 de verre intérieure par l'intermédiaire de l'intercalaire 40.

De préférence, les moyens 150 de désaération sont réalisés dans la face 52 extérieure et/ou la face 54 intérieure de l'insert 50, par exemple sous la forme d'une ou plusieurs stries 152 telles qu'illustré sur la figure 16.

En variante, les moyens 150 de désaération sont obtenus en jouant sur la rugosité de la face 52 extérieure et/ou la face 54 intérieure de l'insert 50 lesquelles présentent par exemple un aspect de peau d'orange ou encore celui d'une balle de golf.

Les moyens 150 de désaération sont donc réalisés en creux dans la face 52 extérieure et/ou la face 54 intérieure de l'insert 50, tel qu'illustré de l'une des stries dans une loupe sur la figure 16.

Les moyens 150 de désaération sont disposés pour évacuer l'air de l'intercalaire 40 vers l'extérieur du vitrage 10, en particulier en permettant un passage de l'air entre l'insert 50 d'une part et la feuille 20 de verre extérieur et la feuille 30 de verre intérieur, d'autre part.

Avantageusement, les moyens 150 de désaération de l'insert 50 sont aptes à faciliter l'évacuation de l'air contenu dans le matériau polymère de l'intercalaire 40 lors du désaérage se produisant pendant l'assemblage du vitrage 10.

L'insert 50 comporte successivement un bord 51 supérieur, un bord 53 arrière, un bord 55 inférieur et un bord 57 avant, lesdits bord 51 supérieur et bord 55 inférieur opposés s'étendant globalement selon l'orientation longitudinale.

Tel qu'illustré sur la figure 16, les stries 152 constituant les moyens 150 de désaération forment un quadrillage, les unes s'étendant entre le bord 51 supérieur et le bord 55 inférieur, les autres entre le bord 53 arrière et le bord 57 avant.

De préférence, le bord 53 arrière et le bord 57 avant de l'insert 50 s'étendent de manière oblique et non parallèle, globalement selon l'orientation verticale de sorte que l'insert 50 présente une forme générale trapézoïdale.

La face 52 externe et la face 54 interne de l'insert 50 s'étendent parallèlement à la face située en vis-à-vis, telles que la face 24 intérieure de la feuille 20 de verre extérieure pour la face 52 externe et la face 42 extérieure de l'intercalaire 40 pour la face 54 interne selon le premier mode de réalisation.

L'insert 50 comporte un trou 56 destiné à être traversé par les moyens de fixation du vitrage 10 avec le dispositif d'entraînement.

De préférence, le trou 56 est réalisé dans l'insert 50 avant l'assemblage du vitrage 10 feuilleté, c'est-à-dire avant d'assembler la feuille 20 de verre extérieure et la feuille 30 de verre intérieure par l'intermédiaire de l'intercalaire 40 pour obtenir ledit vitrage 10 feuilleté, ledit intercalaire 40 comportant au moins une découpe 46 recevant ledit insert 50.

Avantageusement, l'intercalaire 40 présente une découpe ayant une forme complémentaire de celle de l'insert 50 grâce à quoi ledit insert 50 est en contact avec l'intercalaire 40 sur tout ou partie de son pourtour, ici l'ensemble de ses bords 51, 53 et 57 à l'exception du bord 55 inférieur puisque la découpe 46 en forme de « U » inversé est ouverte vers le bas.

En variante, le trou 56 est réalisé postérieurement à l'assemblage du vitrage 10 feuilleté.

Si une telle variante implique de réaliser une opération de perçage du trou 56 postérieurement à l'assemblage du vitrage 10, une meilleure précision dans le positionnement dudit trou 56 est en contrepartie susceptible d'être obtenue dès lors que l'insert 50 occupe une position définitive par rapport à l'intercalaire 40 comme aux feuilles 20, 30 de verre.

Avantageusement, le trou 56 de l'insert 50 est centré sur l'axe O du trou 18 de fixation, ledit axe O constituant un axe de référence notamment pour la fixation des moyens de fixation du vitrage 10.

De préférence, le trou 56 de l'insert 50 présente un diamètre qui est compris entre 10 mm et 25 mm.

Avantageusement, l'insert 50 comporte au moins une partie ne s'étendant pas parallèlement à la direction verticale de manière à présenter au moins une surface de maintien qui soit apte à le retenir verticalement en position par coopération de formes avec l'intercalaire 40, l'insert 50 étant en contact par ses bords 51, 53, 57 avec ledit intercalaire 40.

Dans le premier mode de réalisation, l'insert 50 présente par exemple une forme trapézoïdale, ledit insert 50 étant orienté de manière que l'extrémité supérieure soit la plus large grâce à quoi la surface de maintien est constituée par les bords 53 avant et 57 arrière obliques de l'insert 50.

Avantageusement, la surface de maintien de l'insert 50 ainsi définie avec l'intercalaire 40 participe à la retenue du vitrage 10 feuilleté en s'opposant aux efforts d'orientation verticale.

En utilisation, le vitrage 10 feuilleté est relié au dispositif d'entraînement par des moyens de fixation agencés pour traverser le trou 18 de fixation de l'une des parties 16 de fixation du vitrage, soit successivement le trou 26 de la feuille 20 de verre extérieure, le trou 56 dans l'insert 50 et le trou 36 dans la feuille 30 de verre intérieure qui constituent ledit trou 18 de fixation.

L'insert 50 pourrait toutefois présenter de nombreuses formes susceptibles de convenir à l'obtention d'une telle surface de maintien, non parallèle à l'orientation verticale, coopérant avec son complémentaire dans l'encoche 46 de l'intercalaire 40.

En variante et de manière non limitative, ladite surface de maintien de l'insert 50 appartient à une partie faisant saillie selon la direction longitudinale par rapport au reste de l'insert 50, par exemple la barre supérieure d'un insert qui présenterait une forme générale en « T » logé dans une encoche 46 complémentaire.

Avantageusement, l'insert 50 participe ainsi à retenir le vitrage 10 en cas de choc(s) conduisant à une casse du verre.

En variante, l'insert 50 ne comporte pas de surface de maintien particulière et présente par exemple, comme la découpe 46, une forme rectangulaire ou carrée.

Avantageusement, un vitrage 10 feuilleté comportant au moins un insert 50 selon l'invention permet en outre d'optimiser la transmission des efforts de serrage, notamment ceux appliqués par les moyens de fixation.

Avantageusement, on limite ainsi les risques de fluage du polyvinylbutyral (PVB) de l'intercalaire 40 non seulement pendant l'assemblage du vitrage 10 feuilleté mais aussi et surtout ensuite lors de son utilisation, grâce à quoi on obtient une meilleure stabilité dans le temps du vitrage 10 feuilleté.

Selon une première variante de réalisation de l'insert 50 illustrée par la figure 5, l'insert 50 comporte au moins une douille 58 qui, s'étendant suivant l'axe O, fait saillie transversalement par rapport au reste de l'insert 50 interposé entre la feuille 20 de verre extérieure et la feuille 30 de verre intérieure.

De préférence, la douille 58 est de forme cylindrique, délimitant circonférentiellement le trou 56 de l'insert 50, ladite douille 58 étant circonférentiellement continue.

Avantageusement, la douille 58 est configurée pour traverser au moins une partie de la feuille 30 de verre intérieure munie du trou 36.

De préférence, la douille 58 est configurée pour traverser toute la feuille 30 de verre intérieure de manière à protéger ladite feuille 30 par rapport aux moyens de fixation destinés à être reçu dans le trou 18 de fixation du vitrage 10 formé en partie par le trou 36 que comporte ladite feuille 30 de verre intérieure.

En variante, la douille 58 est configurée pour traverser tout ou au moins une partie de la feuille 20 de verre extérieure munie du trou 26 de manière à protéger ladite feuille 20 de verre extérieure au niveau du trou 18 de fixation.

Ainsi, la douille 58 peut s'étendre d'un côté ou de l'autre de l'insert 50, c'est-à-dire vers la feuille 20 de verre extérieure ou vers la feuille 30 de verre intérieure. En variante, la douille 58 s'étend avantageusement d'un côté et de l'autre de l'insert 50.

Avantageusement, la douille 58 de l'insert 50 permet de protéger les feuilles 20, 30 de verre du vitrage 10 au niveau des trous mais également de positionner avec précision les moyens de fixation par rapport au vitrage 10, soit par rapport à l'axe O du trou 18 de fixation.

De préférence, le trou 26 de la feuille 20 de verre extérieure et le trou 36 de la feuille 30 de verre intérieure présentent un diamètre qui est supérieur au diamètre du trou 56 de l'insert 50, avec ou sans douille 58.

La position des moyens de fixation dans la partie 16 de fixation du vitrage 10 est déterminée par la douille 58 de l'insert 50, c'est-à-dire indépendamment du décalage (« *mismatch* ») susceptible d'exister entre l'axe du trou 26 de la feuille 20 de verre extérieure et l'axe du trou 36 de la feuille 30 de verre intérieure.

Avantageusement, les moyens de fixation coopèrent avec la douille 58 de sorte que les efforts sont repris par l'insert 50 et non directement par les feuilles 20, 30 de verre du vitrage 10.

Lorsque l'insert 50 comporte une douille 58, la feuille 20 de verre extérieure et la feuille 30 de verre intérieure du vitrage 10 sont avantageusement dépourvues de chanfrein(s) au niveau des trous 26 et/ou 36 ce qui supprime une opération et réduit les coûts de fabrication.

Avantageusement, le trou 26 dans la feuille 20 de verre extérieure et le trou 36 dans la feuille 30 de verre sont réalisés avant l'assemblage pour obtenir ledit vitrage 10 feuilleté.

Selon une deuxième variante de réalisation de l'insert 50 illustrée par la figure 6, l'insert 50 comporte au moins une douille 58 qui, suivant l'axe O, s'étend de part et d'autre du plan principal d'orientation verticale de l'insert 50.

Avantageusement, la douille 58 de l'insert 50 est configurée pour traverser au moins une partie, de préférence toute, la feuille 20 de verre extérieure munie du trou 26 et au moins une partie, de préférence toute, la feuille 30 de verre intérieure munie du trou 36 et cela de manière à protéger la ou lesdites feuilles 20, 30 de verre au niveau du trou 18 de fixation.

Avantageusement, la douille 58 de l'insert 50 est susceptible de former transversalement une entretoise pour les moyens de fixation destinés à venir appliquer un effort de serrage au niveau de ladite au moins une partie 16 de fixation du vitrage 10.

Avantageusement, la position des moyens de fixation est déterminée par la douille 58 de l'insert 50 délimitant le trou 56 grâce à quoi on s'affranchit comme précédemment de l'incidence d'un décalage (« *mismatch* ») entre l'axe du trou 26 de la feuille 20 de verre extérieure et l'axe du trou 36 de la feuille 30 de verre intérieure.

Selon une troisième variante de réalisation de l'insert 50 illustrée par la figure 7, l'insert 50 ne comporte initialement pas de trou 56 mais comporte un noyau 60. Tel qu'illustré sur la figure 7, le noyau 60 est par exemple initialement totalement plein.

Avantageusement, le noyau 60 est réalisé en une seule pièce, venu de matière, avec l'insert 50. Le noyau 60 est par exemple obtenu par moulage avec l'insert 50, réalisé en matière plastique ou métallique.

En variante, le noyau 60 est une pièce distincte de l'insert 50 et le noyau 60 est apte à être fixé solidairement audit insert 50.

De préférence, le noyau 60 de l'insert 50 s'étend en saillie par rapport à l'une et l'autre des faces 52 extérieure et 54 intérieure de l'insert 50.

Le noyau 60 est destiné, après assemblage desdites feuilles 20, 30 du vitrage 10, à être percé de manière à former ultérieurement le trou 56 destiné à recevoir les moyens de fixation et à obtenir avantageusement une douille 58 analogue à celle décrite précédemment en référence à la figure 6.

Avec un insert 50 selon cette troisième variante de réalisation, le trou 56 est ainsi formé dans le noyau 60 de l'insert 50 après assemblage desdites feuilles 20, 30 du vitrage 10.

Avantageusement, le trou 56 présente un diamètre d'une valeur qui est déterminée sélectivement en fonction notamment des moyens de fixation grâce à quoi il est possible de standardiser au moins l'insert 50 muni du noyau 60.

L'insert 50 est susceptible d'être utilisé avec au moins des premiers moyens de fixation pour lesquels un trou 56 d'un premier diamètre sera réalisé dans le noyau 60 et avec des deuxièmes moyens de fixation pour lesquels un trou 56 présentant un deuxième diamètre sera réalisé dans le noyau 60.

L'épaisseur de matière formant la douille 58 de l'insert 50 est par conséquent susceptible de varier sur une plage de valeurs déterminées respectivement par des diamètres minimum et maximum du trou 56.

Dans le premier mode de réalisation qui a été décrit en référence aux figures 1 à 4 ainsi que les variantes de réalisation de l'insert 50 des figures 5 à 7, le vitrage 10 feuilleté est avantageusement un vitrage symétrique.

Selon l'invention, le vitrage 10 comporte un insert 50 muni au moins d'un trou 56 qui est agencé dans chacune des parties 16 de fixation à la faveur d'une découpe 46 ménagée dans l'intercalaire 40.

Chaque partie 16 de fixation comporte respectivement, au niveau du trou 18 de fixation, la feuille 20 de verre extérieure, l'insert 50 et la feuille 30 de verre intérieure, ledit insert 50 étant interposé transversalement entre lesdites feuilles 20, 30.

Ainsi, la partie 16 de fixation présente une bonne rigidité, notamment au niveau du trou 18 de fixation, grâce à quoi on limite le risque de casse du vitrage 10 feuilleté.

Toutefois, l'invention n'est nullement limitée à un tel vitrage 10 symétrique et trouve également à s'appliquer à un vitrage 10 feuilleté asymétrique.

Dans un tel vitrage 10 feuilleté de type asymétrique, ladite au moins une partie 16 de fixation du vitrage 10 comporte au moins la feuille 20 de verre extérieure et l'insert 50, non recouverte par la feuille 30 de verre intérieure.

Tel qu'illustré par les figures 8 et 9, la feuille 30 de verre intérieure comportant un bord 35 inférieur s'étendant longitudinalement de manière rectiligne est en effet plus courte que ne l'est la feuille 20 de verre extérieure formant ladite partie 16 de fixation du vitrage 10.

De préférence, l'intercalaire 40 présente une forme identique à celle de la feuille 30 de verre intérieure de manière à ne pas recouvrir les parties 16 de fixation du vitrage 10.

Avantageusement, l'intercalaire 40 comporte une feuille en matériau polymère, de préférence en polyvinylbutyral (PVB).

En variante non représentée, l'intercalaire est une structure multicouche comportant plus d'une feuille, par exemple deux ou trois feuilles, la découpe 46 est alors réalisée dans tout ou au moins une partie desdites feuilles formant l'intercalaire 40.

Dans une telle variante, la face 52 extérieure de l'insert 50 est susceptible de coopérer avec une autre face que la face 24 intérieure de la feuille 20 de verre extérieure et/ou la face 54 intérieure avec une autre face que la face 32 extérieure de la feuille 30 de verre intérieure, c'est-à-dire de coopérer l'une et/ou l'autre avec une face de l'une adjacente des feuilles formant ledit intercalaire multicouche.

Par comparaison avec un vitrage 10 selon le premier mode de réalisation, le vitrage 10 feuilleté de type asymétrique selon ce deuxième mode de réalisation comporte des parties 16 de fixation présentant généralement une moindre épaisseur ce qui est susceptible d'en limiter l'interchangeabilité.

Selon une variante représentée à la figure 10, l'insert 50 est configuré pour compenser l'absence de la feuille 30 de verre intérieure, ici plus courte ne recouvrant intégralement l'insert 50.

Avantageusement, l'insert 50 n'a pas une épaisseur constante (tel qu'illustré sur la figure 9) mais présente transversalement une forme étagée de manière que le vitrage 10 feuilleté présente une épaisseur uniforme, y compris dans lesdites parties 16 de fixation.

L'insert 50 comporte une première partie qui est interposée entre la feuille 20 de verre extérieure et la feuille 30 de verre intérieure et une deuxième partie qui, présentant une épaisseur supérieure à celle de la première partie, est configurée pour s'étendre sous la feuille 30 de verre intérieure.

De préférence, la première partie de l'insert 50 présente ainsi une épaisseur correspondant à celle de l'intercalaire 40 et la deuxième partie de l'insert 50 une épaisseur correspondant à celle de l'intercalaire 40 et de la feuille 20 de verre intérieure.

Avantageusement, l'insert 50 comporte un épaulement à la jonction entre la première partie et la deuxième partie plus épaisse qui est destiné à coopérer avec le bord 35 de la feuille 20 de verre intérieure.

De préférence, l'insert 50 comporte des moyens 150 de désaération tels que décrits précédemment pour le premier mode de réalisation, lesdits moyens 150 de désaération étant alors préférentiellement agencés uniquement sur la face 52 extérieure de l'insert 50 coopérant avec la face 24 intérieure de la feuille 20 de verre extérieure.

Dans un vitrage 10 feuilleté de type asymétrique selon ce deuxième mode de réalisation, les parties 16 de fixation présente une rigidité qui est principalement déterminée par la feuille 20 de verre extérieure et par l'insert 50. Ainsi l'insert 50 renforce la résistance du vitrage 10 feuilleté dans la partie 16 de fixation, indépendamment de l'épaisseur de la feuille 20 de verre extérieure qui peut être supérieure ou égale à l'épaisseur de la feuille 30 de verre intérieure.

Selon un troisième mode de réalisation illustré aux figures 11 à 15, la feuille 30 de verre intérieure comporte au moins une découpe 38 ménagée au niveau de la partie 16 de fixation du vitrage 10 feuilleté de sorte que les moyens de fixation coopèrent avec les faces 52 et 54 de l'insert 50 et sans être en contact avec ladite feuille 30 de verre intérieure.

Avantageusement, aucun effort de serrage n'est ainsi appliqué directement sur la feuille 30 de verre intérieure par les moyens de fixation.

Le troisième mode de réalisation est plus particulièrement avantageux lorsque l'épaisseur e30 de la feuille 30 de verre intérieure est telle que des risques de casse existent en raison de ses caractéristiques de comportement mécanique, notamment de résistance limitée.

A titre d'exemple non limitatif, la feuille 20 de verre extérieure présente une épaisseur e20 de 3,5 mm, la feuille de l'intercalaire 40 une épaisseur e40 de 0,76 mm et la feuille 30 de verre intérieure une épaisseur e30 de 1,6 mm.

De préférence et tel qu'illustré par la figure 14, la découpe 38 de la feuille 30 de verre intérieure présente des dimensions inférieures à celles de l'insert 50 de manière que l'insert 50 coopère autour de ladite découpe 38 avec une partie de la face 32 extérieure de la feuille 30 de verre intérieure.

Tel qu'illustré par la figure 14, une bande présentant une largeur « I » s'étend de préférence sur tout le pourtour de l'encoche 38 ménagée dans la feuille 30 de verre intérieure.

Avantageusement, l'insert 50 présente une forme trapézoïdale qui est complémentaire de celle de la découpe 46 de l'intercalaire 40, soit analogue à celle du premier mode de réalisation.

## Revendications

1. Vitrage (10) feuilleté pour un véhicule automobile, notamment un vitrage latéral destiné à être monté coulissant dans une portière du véhicule, comportant au moins une feuille (20) de verre extérieure et une feuille (30) de verre intérieure assemblées par un intercalaire (40) qui comporte au moins une feuille en matériau polymère, ledit vitrage (10) comportant au moins une partie (16) de fixation du vitrage (10) munie d'au moins un trou (18) de fixation qui présente un axe (O) et traverse au moins la feuille (20) de verre extérieure, ledit trou (18) de fixation étant destiné à recevoir des moyens de fixation dudit vitrage (10) avec un dispositif d'entraînement, **caractérisé en ce que** le vitrage (10) comporte au moins un insert (50) qui, comportant un trou (56), est logé dans une découpe (46) complémentaire ménagée dans l'intercalaire (40), au niveau de la partie (16) de fixation.

2. Vitrage feuilleté selon la revendication 1, **caractérisé en ce que** l'insert (50) comporte une face (52) extérieure qui est en contact direct avec une face (24) intérieure de la feuille (20) de verre extérieure et une face (54) intérieure dont tout ou au moins une partie est en contact direct avec une face (32) extérieure de la feuille (30) de verre intérieure.

3. Vitrage feuilleté selon la revendication 1 ou 2, **caractérisé en ce que** l'insert (50) est réalisé dans un matériau présentant une dureté supérieure à celle de l'intercalaire (40) comportant au moins ladite feuille en matériau polymère, notamment une feuille en polyvinylbutyral (PVB), ledit matériau de l'insert (50) présentant par exemple une dureté Shore D comprise entre 70 et 90.

4. Vitrage feuilleté selon l'une quelconque des revendications 1 à 3, **caractérisé en ce que** ledit insert (50) est réalisé dans un matériau plastique, notamment en polyamide (PA) par exemple du PA 6-6, en polyoxyméthylène (POM), en polybutylène téréphtalate (PBT), en polyéthylène téréphtalate (PET), ou dans un matériau métallique, par exemple de l'acier.

5. Vitrage feuilleté selon l'une quelconque des revendications 1 à 4, **caractérisé en ce que** le trou (56) est formé dans l'insert (50) après assemblage desdites feuilles (20, 30) du vitrage (10).

6. Vitrage feuilleté selon l'une quelconque des revendications précédentes, **caractérisé en ce que** le trou (56) de l'insert (50) présente un diamètre compris entre 10 mm et 30 mm, préférentiellement entre 15 mm et 25 mm.

7. Vitrage feuilleté selon l'une quelconque des revendications précédentes, **caractérisé en ce que** l'insert (50) comporte une douille (58) qui, s'étendant suivant l'axe O, est configurée pour traverser au moins une partie de la feuille (20) de verre extérieure munie d'un trou (26) et/ou de la feuille (30) de verre intérieure munie d'un trou (36).

8. Vitrage feuilleté selon la revendication 7, **caractérisé en ce que** l'insert (50) comporte un noyau (60) s'étendant en saillie par rapport à l'une et/ou l'autre des faces (52) extérieure et (54) intérieure de l'insert (50), ledit noyau (60) étant destiné à être percé pour former la douille (58) que traverse ledit trou (56), préférentiellement percé après assemblage desdites feuilles (20, 30) du vitrage (10).

9. Vitrage feuilleté selon l'une quelconque des revendications précédentes, **caractérisé en ce que** l'insert (50) présente une épaisseur (ε) qui est égale à plus ou moins 10% de l'épaisseur (e40) de l'intercalaire (40), préférentiellement égale à plus ou moins 5% de l'épaisseur (e40) de l'intercalaire (40) et encore plus préférentiellement à plus ou moins 2% de l'épaisseur (e40) de l'intercalaire (40).

10. Vitrage feuilleté selon l'une quelconque des revendications précédentes, **caractérisé en ce que** l'insert (50) est configuré pour former une entretoise entre la feuille (20) de verre extérieure et la feuille (30) de verre intérieure de manière à limiter le fluage du matériau polymère de ladite au moins une feuille de l'intercalaire (40), notamment lors de l'assemblage du vitrage (10) ou lors de l'utilisation du vitrage (10) feuilleté comme vitrage latéral.

11. Vitrage feuilleté selon l'une quelconque des revendications précédentes, **caractérisé en ce que** la feuille (30) de verre intérieure comporte au moins une découpe (38) ménagée dans la partie (16) de fixation du vitrage (10) de manière que les moyens de fixation coopèrent avec l'insert (50) sans contact avec ladite feuille (30) en verre.

12. Vitrage feuilleté selon la revendication 11, **caractérisé en ce que** la découpe (38) de la feuille (30) de verre intérieure présente des dimensions inférieures à celles de l'insert (50) de manière que l'insert (50) coopère autour de ladite découpe (38) avec une partie d'une face (32) extérieure de la feuille (30) de verre intérieure.

13. Vitrage feuilleté selon l'une quelconque des revendications précédentes, **caractérisé en ce que** l'insert (50) comporte au moins une partie (53, 57) configurée pour former une surface de maintien apte à le retenir verticalement en position, ledit insert (50) présentant par exemple une forme trapézoïdale ou une forme en « T ».

14. Vitrage feuilleté selon l'une quelconque des revendications précédentes, **caractérisé en ce que** le vitrage (10) feuilleté est du type symétrique, ladite au moins une partie (16) de fixation du vitrage comportant la feuille (20) de verre extérieure, l'insert (50) et la feuille (30) de verre intérieure.

15. Vitrage feuilleté selon l'une quelconque des revendications précédentes, **caractérisé en ce que** l'insert (50) comporte des moyens (150) de désaération configurés pour permettre une évacuation de l'air contenu dans l'intercalaire (40) lors de l'assemblage du vitrage (10) feuilleté.

## Patentansprüche

1. Verbundverglasung (10) für ein Kraftfahrzeug, insbesondere eine Seitenverglasung, die dazu bestimmt ist, in einer Fahrzeugtür verschiebbar montiert zu werden, die mindestens eine äußere Glasscheibe (20) und eine innere Glasscheibe (30), die durch eine Zwischenlage (40) zusammengefügt sind, die mindestens eine Folie aus Polymermaterial aufweist, wobei die Verglasung (10) mindestens einen Teil (16) zur Befestigung der Verglasung (10), der mit mindestens einem Befestigungsloch (18) versehen ist, das eine Achse (O) vorweist und mindestens die äußere Glasscheibe (20) durchquert, aufweist, wobei das Befestigungsloch (18) dazu bestimmt ist, Mittel zur Befestigung der Verglasung (10) mit einer Antriebsvorrichtung aufzunehmen,
**dadurch gekennzeichnet, dass** die Verglasung (10) mindestens einen Einsatz (50), der ein Loch (56) aufweist und in einem komplementären Ausschnitt (46) untergebracht ist, der in der Zwischenlage (40) an dem Befestigungsteil (16) vorgesehen ist, aufweist.

2. Verbundverglasung nach Anspruch 1, **dadurch gekennzeichnet, dass** der Einsatz (50) eine Außenseite (52), die in direktem Kontakt mit einer Innenseite (24) der äußeren Glasscheibe (20) steht, und eine Innenseite (54) aufweist, die ganz oder von der mindestens ein Teil in direktem Kontakt mit einer Außenseite (32) der inneren Glasscheibe (30) steht.

3. Verbundverglasung nach Anspruch 1 oder 2,
**dadurch gekennzeichnet, dass** der Einsatz (50) aus einem Material hergestellt ist, das eine größere Härte als die der Zwischenlage (40) vorweist, die mindestens die Folie aus Polymermaterial, insbesondere eine Folie aus Polyvinylbutyral (PVB), aufweist, wobei das Material des Einsatzes (50) beispielsweise eine Shore-D-Härte zwischen 70 und 90 vorweist.

4. Verbundverglasung nach einem der Ansprüche 1 bis 3,
**dadurch gekennzeichnet, dass** der Einsatz (50) aus einem Kunststoffmaterial, insbesondere aus Polyamid (PA), z. B. PA 6-6, aus Polyoxymethylen (POM), aus Polybutylenterephthalat (PBT), aus Polyethylenterephthalat (PET) oder aus einem metallischen Material, z. B. Stahl, hergestellt ist.

5. Verbundverglasung nach einem der Ansprüche 1 bis 4,
**dadurch gekennzeichnet, dass** das Loch (56) in dem Einsatz (50) nach dem Zusammenfügen der Folien (20, 30) der Verglasung (10) ausgebildet wird.

6. Verbundverglasung nach einem der vorstehenden Ansprüche,
**dadurch gekennzeichnet, dass** das Loch (56) des Einsatzes (50) einen Durchmesser zwischen 10 mm und 30 mm, bevorzugt zwischen 15 mm und 25 mm, vorweist.

7. Verbundverglasung nach einem der vorstehenden Ansprüche,
**dadurch gekennzeichnet, dass** der Einsatz (50) eine Hülse (58) aufweist, die sich entlang der O-Achse erstreckt und konfiguriert ist, um mindestens einen Teil der mit einem Loch (26) versehenen äußeren Glasscheibe (20) und/oder der mit einem Loch (36) versehenen inneren Glasscheibe (30) zu durchdringen.

8. Verbundverglasung nach Anspruch 7, **dadurch gekennzeichnet, dass** der Einsatz (50) einen Kern (60) aufweist, der sich in Bezug auf die eine und/oder die andere der Außen- (52) und der Innenseite (54) des Einsatzes (50) vorstehend erstreckt, wobei der Kern (60) dazu bestimmt ist, durchbohrt zu werden, um die Hülse (58) auszubilden, die das Loch (56) durchdringt, der vorzugsweise nach dem Zusammenfügen der Folien (20, 30) der Verglasung (10) durchbohrt wird.

9. Verbundverglasung nach einem der vorstehenden Ansprüche,
**dadurch gekennzeichnet, dass** der Einsatz (50) eine Dicke (ε) vorweist, die gleich mehr oder weniger 10 % der Dicke (e40) der Zwischenlage (40), vorzugsweise gleich mehr oder weniger 5 % der Dicke (e40) der Zwischenlage (40) und noch mehr bevorzugt gleich mehr oder weniger 2 % der Dicke (e40) der Zwischenlage (40), ist.

10. Verbundverglasung nach einem der vorstehenden Ansprüche,
**dadurch gekennzeichnet, dass** der Einsatz (50) konfiguriert ist, um einen Abstandhalter zwischen der äußeren Glasscheibe (20) und der inneren Glasscheibe (30) auszubilden, sodass das Kriechen des Polymermaterials der mindestens einen Folie der Zwischenlage (40), insbesondere bei dem Zusammenfügen der Verglasung (10) oder bei der Verwendung der Verbundverglasung (10) als Seitenverglasung, begrenzt wird.

11. Verbundverglasung nach einem der vorstehenden Ansprüche,
**dadurch gekennzeichnet, dass** die innere Glasscheibe (30) mindestens einen Ausschnitt (38) aufweist, der in dem Befestigungsteil (16) der Verglasung (10) vorgesehen ist, sodass die Befestigungsmittel mit dem Einsatz (50) ohne Kontakt mit der Glasscheibe (30) zusammenwirken.

12. Verbundverglasung nach Anspruch 11, **dadurch gekennzeichnet, dass** der Ausschnitt (38) der inneren Glasscheibe (30) Abmessungen aufweist, die kleiner als diejenigen des Einsatzes (50) sind, sodass der Einsatz (50) um den Ausschnitt (38) herum mit einem Teil einer Außenseite (32) der inneren Glasscheibe (30) zusammenwirkt.

13. Verbundverglasung nach einem der vorstehenden Ansprüche,
**dadurch gekennzeichnet, dass** der Einsatz (50) mindestens einen Teil (53, 57) aufweist, der konfiguriert ist, um eine Halteoberfläche auszubilden, die geeignet ist, ihn vertikal in einer Position festzuhalten, wobei der Einsatz (50) beispielsweise eine Trapezform oder eine "T"-Form vorweist.

14. Verbundverglasung nach einem der vorstehenden Ansprüche,
**dadurch gekennzeichnet, dass** die Verbundverglasung (10) eine symmetrische Art besitzt, wobei der mindestens eine Teil (16) zur Befestigung der Glasscheibe die äußere Glasscheibe (20), den Einsatz (50) und die innere Glasscheibe (30) aufweist.

15. Verbundverglasung nach einem der vorstehenden Ansprüche,
**dadurch gekennzeichnet, dass** der Einsatz (50) Mittel (150) zur Entlüftung aufweist, die konfiguriert sind, um eine Evakuierung der in der Zwischenlage (40) enthaltenen Luft bei dem Zusammenfügen der Verbundverglasung (10) zu ermöglichen.

## Claims

1. A laminated glazing (10) for a motor vehicle, particularly a side glazing intended to be slidably mounted in a door of the vehicle, comprising at least one outer glass sheet (20) and one inner glass sheet (30) assembled by an interlayer (40) which comprises at least one sheet of polymer material, said glazing (10) comprising at least one part (16) for attaching the glazing (10) provided with at least one attachment hole (18) which has an axis (O) and passes through at least the outer glass sheet (20), said attachment hole (18) being intended to receive means for attaching said glazing (10) with a drive device, **characterized in that** the glazing (10) comprises at least one insert (50) which, comprising a hole (56), is housed in a complementary cut-out (46) provided in the interlayer (40), at the attachment part (16).

2. The laminated glazing according to claim 1, **characterized in that** the insert (50) comprises an outer face (52) which is in direct contact with an inner face (24) of the outer glass sheet (20) and an inner face (54) of which all or at least one part is in direct contact with an outer face (32) of the inner glass sheet (30).

3. The laminated glazing according to claim 1 or 2, **characterized in that** the insert (50) is made of a material having a hardness greater than that of the interlayer (40) comprising at least said sheet of polymer material, particularly a sheet of polyvinyl butyral (PVB), said material of the insert (50) having for example a Shore D hardness between 70 and 90.

4. The laminated glazing according to any one of claims 1 to 3, **characterized in that** said insert (50) is made of a plastic material, particularly polyamide (PA) for example PA 6-6, polyoxymethylene (POM), polybutylene terephthalate (PBT), polyethylene terephthalate (PET), or a metal material, for example steel.

5. The laminated glazing according to any one of claims 1 to 4, **characterized in that** the hole (56) is formed in the insert (50) after the assembly of said sheets (20, 30) of the glazing (10).

6. The laminated glazing according to any one of the preceding claims, **characterized in that** the hole (56) of the insert (50) has a diameter between 10 mm and 30 mm, preferentially between 15 mm and 25 mm.

7. The laminated glazing according to any one of the preceding claims, **characterized in that** the insert (50) comprises a bushing (58) which, extending along the axis O, is configured to pass through at least one part of the outer glass sheet (20) provided with a hole (26) and/or of the inner glass sheet (30) provided with a hole (36).

8. The laminated glazing according to claim 7, **characterized in that** the insert (50) comprises a core (60) projecting with respect to one and/or the other of the outer (52) and inner (54) faces of the insert (50), said core (60) being intended to be bored so as to form the bushing (58) which said hole passes through (56), preferentially bored after assembly of said sheets (20, 30) of the glazing (10).

9. The laminated glazing according to any one of the preceding claims, **characterized in that** the insert (50) has a thickness (ε) that is equal to more or less 10% of the thickness (e40) of the interlayer (40), preferentially equal to more or less 5% of the thickness (e40) of the interlayer (40) and even more preferentially to more or less 2% of the thickness (e40) of the interlayer (40).

10. The laminated glazing according to any one of the preceding claims, **characterized in that** the insert (50) is configured to form a spacer between the outer glass sheet (20) and the inner glass sheet (30) so as to limit the creep of the polymer material of said at least one sheet of the interlayer (40), particularly during the assembly of the glazing (10) or during the use of the laminated glazing (10) as side glazing.

11. The laminated glazing according to any one of the preceding claims, **characterized in that** the inner glass sheet (30) comprises at least one cut-out (38) provided in the part (16) for attaching the glazing (10) so that the attachment means engage with the insert (50) without contact with said glass sheet (30).

12. The laminated glazing according to claim 11, **characterized in that** the cut-out (38) of the inner glass sheet (30) has dimensions smaller than those of the insert (50) so that the insert (50) engages around said cut-out (38) with a part of an outer face (32) of the inner glass sheet (30).

13. The laminated glazing according to any one of the preceding claims, **characterized in that** the insert (50) comprises at least one part (53, 57) configured to form a holding surface capable of retaining it vertically in position, said insert (50) having for example a trapezoidal shape or T shape.

14. The laminated glazing according to any one of the preceding claims, **characterized in that** the laminated glazing (10) is of the symmetric type, said at least one part (16) for attaching the glazing comprising the outer glass sheet (20), the insert (50) and the inner glass sheet (30).

15. The laminated glazing according to any one of the preceding claims, **characterized in that** the insert (50) comprises de-airing means (150) configured to allow a discharge of the air contained in the interlayer (40) during the assembly of the laminated glazing (10).
